# EUROPEAN PATENT APPLICATION

(11) **EP 4 736 636 A1**
(43) Date of publication of application: **06.05.2026**
(21) Application number: 24832590.4
(22) Date of filing: 27.06.2024
(51) Int. Cl.: A01K 1/02, B62B 9/14, B62B 9/10, A47D 13/02, B60N 2/28

(54) **CARRIER AND TRAVEL APPARATUS**

(30) Priority: 27.06.2023 US 202363510477 P; 06.10.2023 US 202363588397 P; 27.10.2023 US 202363593696 P
(71) Applicant: Jani International Pte. Ltd., Singapore 569874 (SG)
(72) Inventor: CHENG, Chinming, Taipei, 114 (TW); CHENG, Kaiwen, Taipei, 114 (TW); WANG, Juilu, Taipei, 114 (TW)
(74) Representative: Müller-Boré & Partner Patentanwälte PartG mbB
(86) International application number: PCT/SG2024/050421
(87) International publication number: WO 2025/005884

(57) **Abstract**

Disclosed in the present invention are a carrier and a travel apparatus. The carrier comprises: a box body portion; and a canopy portion, the canopy portion being detachably connected to the box body portion by means of a plurality of connecting reinforcing components so as to fasten the canopy portion to the box body portion, wherein a first end portion of each connecting reinforcing component is connected to the canopy portion or the connecting reinforcing component and the canopy portion form an integrated structure, the connecting reinforcing component has a second end portion extending out of the canopy portion, and the second end portion of the connecting reinforcing component is detachably connected to the box body portion; or the connecting reinforcing component comprises a first connecting component and a second connecting component, the first connecting component is connected to the canopy portion, the second connecting component is connected to the box body portion, and the first connecting component and the second connecting component are detachably connected.

## Description

### TECHNICAL FIELD

The present disclosure generally relates to a travel device. In particular, the present disclosure relates to a carrier and a travel device configured to confine an animal therein.

### BACKGROUND

In recent years, many people regard their pets as family members or companions, and therefore pay more and more attention to the companionship and care of pets, including the safety of pets in cars. That is, more and more people pay the same attention and effort to the safety of pets in cars as to the safety of infants in cars.

It is common to carry a pet in a carrier of a travel device. However, when the carrier is hit by a collision, a canopy is easy to fall off the carrier. In addition, for the current travel device with a carrier attachment mechanism disposed on the base, if the connection release mechanism is disposed at a bottom or a side surface of the base, it may not be easy for the pet owner to attach the carrier to the base or detach it from the base.

### SUMMARY

In an aspect, the present disclosure provides a carrier, which includes a box body portion and a canopy portion. The canopy portion is detachably connected to the box body portion through a plurality of connection enhancement members, so as to fasten the canopy portion to the box body portion. A first end portion of each of the connection enhancement members is connected to the canopy portion, or each of the connection enhancement members and the canopy portion form an integral structure, each of the connection enhancement members has a second end portion extending from the canopy portion, and the second end portion of each of the connection enhancement members is detachably connected to the box body portion. Or, each of the connection enhancement members includes a first connection member and a second connection member, the first connection member is connected to the canopy portion, the second connection member is connected to the box body portion, and the first connection member is detachably connected to the second connection member.

Further, the carrier further includes a bracket assembly connected to the box body portion. The bracket assembly is provided with retaining rings, the retaining rings each forms an opening, and the second end portion of each of the connection enhancement members extends through one of the openings and then reverses toward the canopy portion and is positioned. Or, the bracket assembly includes concave portions, the second end portion of each of the connection enhancement members has a rigid hook-shaped end portion, and the hook-shaped end portion is adapted to be received by one of the concave portions. Or, the second end portion of each of the connection enhancement members is provided with a first guide rod; the bracket assembly is formed with first guide grooves, and each of the first guide grooves is configured to receive, guide and limit one of the first guide rods. Or, each of the connection enhancement members includes a first connection band having the first end portion and the second end portion; the carrier further includes second connection bands attached to the bracket assembly, and each of the second connection bands has an exposed free end; the free end of each of the second connection bands is detachably connected to the second end portion of one of the first connection bands.

Further, each of the second connection bands is attached to a surface of the bracket assembly facing an outer bottom portion of the box body portion, and the free end of each of the second connection bands passes through between the bracket assembly and the box body portion and is exposed. Or, the bracket assembly has hollow channels, and each of the second connection bands extends in one of the hollow channels and is exposed from an end of the one of the hollow channels. Or, the bracket assembly is formed with second guide grooves, each of the second connection bands includes a second guide rod embedded in the each of the second connection band, and each of the second guide rods is adapted to be accommodated in one of the second guide grooves.

Further, the bracket assembly includes a first frame, a second frame and a connection frame. The first frame is close to an upper periphery of the box body portion. The second frame is located below the first frame. The connection frame is connected between the first frame and the second frame. A contour of the first frame and a contour of the connection frame correspond to a contour of the box body portion. Each of the second connection bands is attached to a surface of the connection frame facing the outer bottom portion of the box body portion through a fastener, and the free end of each of the second connection bands is exposed at an end of the connection frame. Or, the connection frame is formed with the hollow channels, and the free end of each of the second connection bands is exposed from an end of the connection frame. Or, the connection frame is formed with the second guide grooves.

Further, the carrier includes an accommodation body, and the accommodation body includes the box body portion. The accommodation body has a top opening, and the canopy portion is covered on the accommodation body to cover the top opening. A frame at a bottom of the canopy portion includes two opposite first side edges and two opposite second side edges, and the two second side edges are located between the two first side edges. The accommodation body includes two opposite first side surfaces and two opposite second side surfaces, and the two second side surfaces are located between the two first side surfaces. At least one of the connection enhancement members is arranged between each of the first side edges and the opposite first side surface, and at least one of the connection enhancement members is arranged between each of the second side edges and the opposite second side surface.

Further, the carrier includes an accommodation body, and the accommodation body includes the box body portion. The accommodation body has a top opening, and the canopy portion is covered on the accommodation body to cover the top opening. The canopy portion includes two half canopies oppositely arranged, the two half canopies are a first half canopy and a second half canopy respectively, and an edge of the first half canopy and an edge of the second half canopy opposite to each other are detachably connected through at least one connection assembly. Or, the canopy portion includes a fixed canopy and a movable canopy, and the fixed canopy is non-detachably connected to the accommodation body. A bottom of the movable canopy is detachably connected to the accommodation body through at least one of the connection enhancement members, and/or, an edge of the movable canopy and an edge of the fixed canopy opposite to each other are detachably connected through at least one connection assembly.

Further, the edge of the first half canopy and the edge of the second half canopy opposite to each other are attracted to each other through a magnetic device as the connection assembly. The magnetic device includes a first magnetic body arranged at the edge of the first half canopy and a second magnetic body arranged at the edge of the second half canopy. When the edge of the first half canopy and the edge of the second half canopy opposite to each other are in contact, the first magnetic body and the second magnetic body are facing each other and attracted to each other. Or, one of the edge of the first half canopy and the edge of the second half canopy opposite to each other is equipped with a knob, and the knob is provided with a third magnetic body. When the edge of the first half canopy and the edge of the second half canopy opposite to each other are in contact, by rotating the knob, the third magnetic body is caused to be attracted to or repelled from the first magnetic body and the second magnetic body.

Further, when the edge of the first half canopy and the edge of the second half canopy opposite to each other are in contact, the first magnetic body and the second magnetic body overlap and attach with each other in an up-and-down direction. A lifting portion is provided on the first half canopy or the second half canopy where the upper one of the first magnetic body and the second magnetic body is located. Or, a pivot base and a hole are provided on the first half canopy or the second half canopy where the upper one of the first magnetic body and the second magnetic body is located. The pivot base is pivotally connected to an operating member, and the operating member includes an abutting end and an operating end. When the operating end is driven by an external force, the abutting end passes through the hole and applies a downward thrust to the second half canopy or the first half canopy located below, so as to separate the first magnetic body and the second magnetic body.

In another aspect, the present disclosure provides a carrier, which includes a box body and a locking mechanism. The box body includes a bottom wall and a side wall. At least one telescopic wall is sleeved on the side wall of the box body, and the at least one telescopic wall is capable of extending and retracting in a height direction of the box body. The locking mechanism is configured to lock a position of the at least one telescopic wall.

In yet another aspect, the present disclosure provides a carrier. A bottom of the carrier is provided with an engaging member or a connection rod, and the engaging member or the connection rod is adapted to be rotatable between a use position and a storage position.

Further, the carrier includes a bottom support structure and a storage portion located above the bottom support structure. A recess portion is formed on a bottom surface of the bottom support structure. The recess portion is provided with at least one rod therein, the at least one rod is mounted with at least one engaging member, the engaging member is provided with an outwardly protruding engaging portion. The engaging member is capable of rotating around the rod on which it is located, such that the engaging portion is rotated to the use position or the storage position.

Further, the carrier further includes a box body portion, an outer bottom portion of the carrier includes a recess portion. When in the storage position, the connection rod is received in the recess portion; when in the use position, the connection rod is pivoted out from the recess portion.

In yet another aspect, the present disclosure provides a travel device, which includes a base and a carrier, and the carrier is detachably connected to the base.

Further, the carrier includes a connection rod, the connection rod is received in a recess portion of an outer bottom portion of the carrier and is capable of being rotated out from the recess portion. The base includes a connection recess and a first activation part. The connection recess is provided with a connection component therein, the connection component has an opening portion for the connection rod to pass through, and the connection recess has an inclined surface for guiding the connection rod. The carrier is provided with a second activation part at a position corresponding to the first activation part. When the carrier is placed on the base, the first activation part triggers the second activation part, and after the second activation part is triggered, the connection rod is caused to pivot to be engaged with the connection component.

Further, the base includes a connection recess, the connection recess is provided with a connection component therein, the connection component has an opening portion. The carrier further includes a bracket assembly connected to the box body portion, the bracket assembly includes a second frame capable of slidably cooperating with the connection recess, and the second frame is capable of passing through the opening portion of the connection component and being loaded into the connection component. The second frame is provided with a structure cooperating with the connection component.

Further, the second frame is provided with a connection column capable of extending and retracting. When the second frame is loaded into the connection component, the connection column is adapted to extend out from the second frame to be engaged with the connection component. Or, the second frame is provided with a stop ring, and when the second frame is loaded into the connection component and the second frame slides into place relative to the connection component, the stop ring is engaged and cooperates with the connection component.

Further, the base slidably cooperates with the carrier, and the base is provided with an activation part and a connection component capable of extending and retracting relative to the base. When the carrier slides into place on the base, the activation part is triggered to cause the connection component to extend and be engaged with the carrier.

Further, the base includes a guide groove, the guide groove is provided with the connection component and the activation part therein, and the connection component is capable of extending and retracting relative to the guide groove. The carrier further includes a bracket assembly connected to the box body portion, the bracket assembly includes a second frame configured to be engaged with the connection component. The bracket assembly is mounted with a guide member. The guide member slidably cooperates with the guide groove. When the guide member slides into place, the guide member triggers the activation part, causing the connection component to extend relative to the guide groove and be engaged with the second frame. Or, the base defines an internal space, and the carrier slidably cooperates with the internal space. The internal space is provided with the connection component and the activation part therein, and the connection component is capable of extending and retracting relative to a wall of the internal space. The carrier includes a connection recess configured to be engaged with the connection component. When the carrier slides into place, the box body portion triggers the activation part, causing the connection component to extend to be engaged with the connection recess.

### BRIEF DESCRIPTION OF THE DRAWINGS

The accompanying drawings constituting part of the present disclosure are used to provide further understanding of the present disclosure. The schematic embodiments of the present disclosure and their descriptions are used to explain the present disclosure and do not constitute improper limitations on the present disclosure.
FIG. 1A and FIG. 1B schematically show perspective views of a carrier of a travel device according to an exemplary embodiment of the present disclosure.
FIG. 2 schematically shows a side view of a carrier of a travel device according to an exemplary embodiment of the present disclosure.
FIG. 3A and FIG. 3B schematically show perspective views of a carrier of a travel device according to an exemplary embodiment of the present disclosure.
FIG. 4 schematically shows a side view of a carrier of a travel device according to an exemplary embodiment of the present disclosure.
FIG. 5 schematically shows a side view of a carrier of a travel device according to an exemplary embodiment of the present disclosure.
FIG. 6A to FIG. 6C schematically show perspective views of a carrier of a travel device according to an exemplary embodiment of the present disclosure.
FIG. 7 schematically shows a side view of a carrier of a travel device according to an exemplary embodiment of the present disclosure.
FIG. 8A and FIG. 8B schematically show perspective views of a carrier of a travel device according to an exemplary embodiment of the present disclosure, and FIG. 8C schematically shows a perspective view of a portion of a bracket assembly.
FIG. 9 schematically shows a perspective view of a carrier of a travel device according to an exemplary embodiment of the present disclosure.
FIG. 10 schematically shows a side view of a carrier of a travel device according to an exemplary embodiment of the present disclosure.
FIG. 11A to FIG. 11C are perspective views of a bracket assembly of the travel device shown in FIG. 9 and FIG. 10, and FIG. 11D schematically shows details of a second connection band and a guide rod combined with a connection frame.
FIG. 12 schematically shows a perspective view of a carrier of a travel device according to an exemplary embodiment of the present disclosure.
FIG. 13A to FIG. 13E schematically show different views of a travel device according to an exemplary embodiment of the present disclosure.
FIG. 14A and FIG. 14B schematically show different views of a travel device according to an exemplary embodiment of the present disclosure.
FIG. 15A and FIG. 15B schematically show different views of a travel device according to an exemplary embodiment of the present disclosure.
FIG. 16A to FIG. 16E schematically show different views of a travel device according to an exemplary embodiment of the present disclosure.
FIG. 17A to FIG. 17E schematically show different views of a travel device according to an exemplary embodiment of the present disclosure.
FIG. 18 shows a stereoscopic view of a carrier provided according to some embodiments of the present disclosure, where a canopy assembly is connected to an accommodation body and the canopy assembly is in a fully expanded state.
FIG. 19 shows a top view of the carrier shown in FIG. 18.
FIG. 20 shows a stereoscopic view of the canopy assembly and the accommodation body of the carrier shown in FIG. 18 being completely separated.
FIG. 21 shows a stereoscopic view of the carrier shown in FIG. 18, where the canopy assembly is in an incompletely expanded state.
FIG. 22 to FIG. 23 show stereoscopic views of a variation of a connection assembly.
FIG. 24 and FIG. 25 show stereoscopic views of another variation of the connection assembly.
FIG. 26 and FIG. 27 show stereoscopic views of yet another variation of the connection assembly.
FIG. 28 and FIG. 29 show stereoscopic views of yet another variation of the connection assembly.
FIG. 30 shows a stereoscopic view of a carrier provided according to some embodiments of the present disclosure.
FIG. 31 shows a top view of the carrier shown in FIG. 30.
FIG. 32 shows a stereoscopic view of the movable canopy and the fixed canopy in FIG. 30 being separated.
FIG. 33 to FIG. 36 show stereoscopic views of a carrier provided according to some embodiments of the present disclosure from different perspectives, where the engaging member in FIG. 34 and in FIG. 35 is in a storage position, and the engaging member in FIG. 36 is in a use position.
FIG. 37 shows a variation of the carrier shown in FIG. 33 to FIG. 36.
FIG. 38 shows another variation of the carrier shown in FIG. 33 to FIG.36.
FIG. 39 shows yet another variation of the carrier shown in FIG. 33 to FIG. 36.
FIG. 40 shows a stereoscopic view of a carrier provided according to some embodiments of the present disclosure.
FIG. 41 shows a top view of the carrier shown in FIG. 40.
FIG. 42 shows a stereoscopic view of the movable canopy and the fixed canopy shown in FIG. 40 being separated.
FIG. 43 shows a partial sectional view taken along line U1-U1 of the movable canopy of FIG. 41.
FIG. 44 shows a stereoscopic view of a carrier provided according to some embodiments of the present disclosure.
FIG. 45 shows a top view of the carrier shown in FIG. 44.
FIG. 46 shows an enlarged view of portion C shown in FIG. 45, where a first magnetic body and a second magnetic body of a magnetic device are attracted to each other.
FIG. 47 shows the first magnetic body and the second magnetic body shown in FIG. 46 being separated from each other.
FIG. 48 shows a stereoscopic view of a canopy of the carrier shown in FIG. 44 when the canopy is in an incompletely opened state.
FIG. 49 shows a variation of the carrier shown in FIG. 44.
FIG. 50 shows a sectional view taken along line U2-U2 of FIG. 49, where the first half canopy and the second half canopy are connected by a magnetic device.
FIG. 51 shows another working state of the magnetic device shown in FIG. 50.
FIG. 52 shows another variation of the carrier shown in FIG. 44.
FIG. 53 shows a sectional view taken along line U3-U3 of FIG. 52.
FIG. 54 shows yet another variation of the carrier shown in FIG. 44.
FIG. 55 shows a sectional view taken along line U4-U4 shown in FIG. 54.
FIG. 56 shows an exploded view of a magnetic device shown in FIG.54.
FIG. 57 shows a stereoscopic view of a carrier provided according to some embodiments of the present disclosure, where a canopy assembly and an accommodation body are connected.
FIG. 58 shows a top view of the carrier shown in FIG. 57.
FIG. 59 shows a stereoscopic view of the canopy assembly and the accommodation body of the carrier shown in FIG. 57 being completely separated.
FIG. 60 shows a stereoscopic view of an accommodation body provided according to some embodiments of the present disclosure, where the accommodation body is in a working state.
FIG. 61 shows a sectional view taken along line U5-U5 of FIG. 60.
FIG. 62 shows a stereoscopic view of an accommodation body shown in FIG. 60, where the accommodation body is in another working state.

### DETAILED DESCRIPTION OF THE EMBODIMENTS

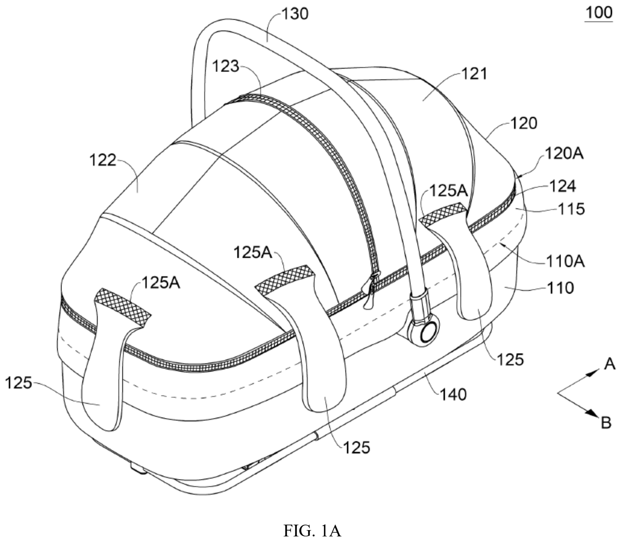

The following detailed description of FIG. 1A to FIG. 17E is intended to enable a person skilled in the art to manufacture and use the travel device of the present disclosure. For the purpose of explanation, specific details are set forth to provide an understanding of the present disclosure. However, it is apparent to a person skilled in the art that these specific details are not necessary to implement the embodiments of the present disclosure. The description of specific applications is only intended as a representative example. Various modifications to the embodiments described herein are obvious to a person skilled in the art, and the general principles defined herein may be applied to other embodiments and applications without departing from the scope of the present disclosure. The present disclosure is not limited to the embodiments shown, but is given as wide a scope as possible consistent with the principles and features disclosed in the present disclosure. In addition, it should be noted that the serial numbers of the embodiments, such as first, second, ..., etc., are only used to distinguish these embodiments and do not indicate any preference for these embodiments.

In the context of the present disclosure, a travel device includes a carrier for confining an animal (such as a pet) therein, and, optionally, a base for mounting the carrier thereon. The base is mountable in a vehicle (more specifically, on a vehicle seat) to allow the travel device to be stably mounted in the vehicle. When viewed from the top of the carrier, the carrier can be generally rectangular, with a longitudinal axis/longitudinal direction (indicated by arrow A in FIG. 1A to FIG. 17E) and a transverse axis/transverse direction (indicated by arrow B in FIG. 1A to FIG. 17E). Alternatively, the carrier can be constructed in a shape other than a rectangle, including but not limited to various equilaterals or other shapes. In the present disclosure, the carrier can be exemplarily arranged and mounted on the rear seat of the vehicle, with its longitudinal axis being parallel to the seat, that is, its transverse axis (a direction B) being parallel to the direction of travelling of the vehicle.

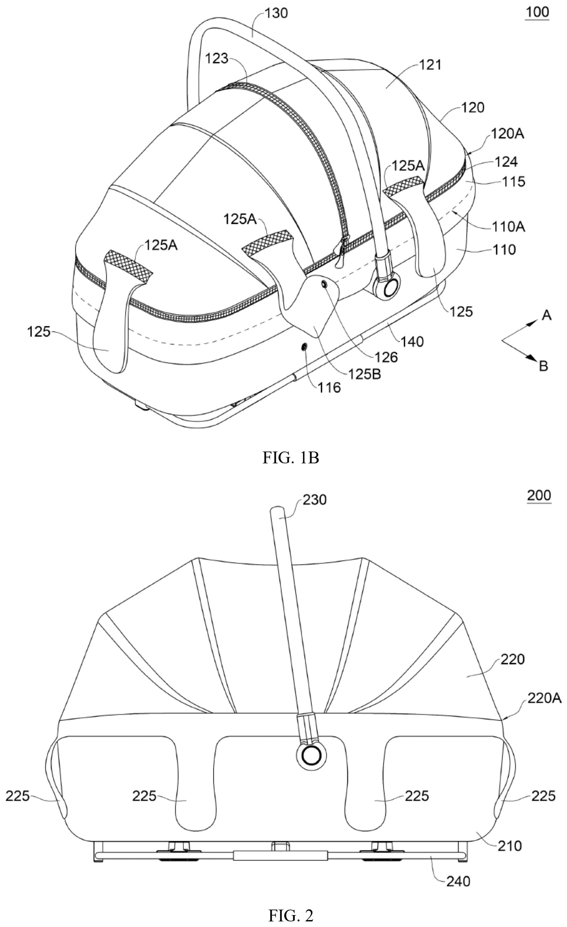

Please refer to FIG. 1A and FIG. 1B, which schematically show perspective views of a carrier 100 of a travel device according to an exemplary embodiment of the present disclosure. The travel device includes a carrier 100, and the carrier 100 is configured to accommodate an animal therein. The carrier 100 can be mounted on a base (not shown) of the travel device mounted in a vehicle. The carrier 100 includes a box body portion (also referred to as a box body) 110, a canopy portion (also referred to as a canopy assembly) 120 and a lifting handle 130. The box body portion defines an accommodating space configured to accommodate an animal. The canopy portion 120 is detachably attached to the box body portion 110. The canopy portion 120 can be directly connected to the box body portion 110, or the canopy portion 120 can be indirectly connected to the box body portion 110, for example, by means of a bracket assembly 140 described below. Both ends of the lifting handle 130 are pivotally and detachably connected to opposite sides of the box body portion 110. The carrier 100 also includes a bracket assembly 140 connected to the box body portion 110, and the carrier 100 can be mounted on a base (not shown) mounted in a vehicle or a trolley through the bracket assembly 140. The box body portion 110 and the bracket assembly 140 can be at least a part of the accommodation body of the carrier 100.

When viewed from the top of the box body portion 110, the box body portion 110 can be rectangular, including a pair of opposite long sides extending in a longitudinal direction A and a pair of opposite short sides extending in the transverse direction B. In this embodiment, the lifting handle 130 is pivotally connected to the opposite long sides of the box body portion 110. The box body portion 110 may be covered by a seat cover 115. In this embodiment, the canopy portion 120 may be a two-piece canopy. That is, the canopy portion 120 may include a first (right) cover 121 and a second (left) cover 122, and the first (right) cover 121 and the second (left) cover 122 are detachably connected to each other through a first connection component 123, such as a zipper, a fastener or various connectors. The first cover 121 and the second cover 122 of the canopy portion 120 have similar sizes and shapes, and when they are connected to each other, the canopy portion 120 is dome-shaped. The dome-shaped canopy portion 120 has a lower periphery 120A, and the lower periphery 120A corresponds to an upper periphery 110A of the box body portion 110 and is detachably connected to the upper periphery 110A of the box body portion 110. In this embodiment, the canopy portion 120 is attached to a periphery of the seat cover 115 by using a second connection component 124 (e.g., a zipper), so as to be detachably connected to the box body portion 110.

In this embodiment, as described, the canopy portion 120 is detachably connected to the seat cover 115, for example, by a zipper as the second connection component 124, thereby attaching the canopy portion 120 to the box body portion 110, but the present disclosure is not limited thereto. Alternatively, the canopy portion may be attached to the box body portion using a connection component other than the zipper, including but not limited to various fastener assemblies, magnetic connectors, etc.

In this embodiment, the carrier 100 further includes at least one connection enhancement member 125 (also referred to as a connection assembly). The connection enhancement member 125 is disposed on the canopy portion 120 to further fasten the canopy portion 120 to the box body portion 110. For example, in this embodiment, the carrier 100 may include six connection enhancement members 125 (each side corresponding to each short side of the box body portion 110 is provided with a connection enhancement member 125, and each side corresponding to each long side of the box body portion 110 is provided with two connection enhancement members 125), and only three connection enhancement members 125 are shown and labeled in FIG. 1A and FIG. 1B. Each of the connection enhancement members 125 is connected to the canopy portion 120 through its end portion (i.e., the first end portion) 125A and extends from the canopy portion 120 toward the box body portion 110, and can be detachably connected to the box body portion 110 through an end portion (i.e., the second end portion) 125B away from the end portion 125A. In this embodiment, the connection enhancement member 125 can be firmly attached to the canopy portion 120 through its end portion 125A by, for example, but not limited to, sewing, bonding, laminating, etc. The connection enhancement member 125 can be connected to the box body portion 110 through its end portion 125B by using various buckle fasteners or snap fasteners, such as but not limited to mutually matching caps and sockets, mutually matching studs or eyelets and posts, etc. That is, the end portion 125B of the connection enhancement member 125 and the box body portion 110 (such as a side wall of the box body portion 110) are provided with mutually buckle fasteners or snap fasteners 126 or 116 respectively. Thus, when the snap fastener 126 on the connection enhancement member 125 and the snap fastener 116 on the box body portion 110 corresponding to each other and matching each other are connected to each other by pressing or snapping, by connecting the six connection enhancement members 125 to the box body portion 110, the connection between the canopy portion 120 and the box body portion 110 can be improved. That is, in various embodiments of the present disclosure, by using at least one connection enhancement member 125 connected between the canopy portion 120 and the box body portion 110, the connection relationship between the canopy portion 120 and the box body portion 110 is improved.

As described, in this embodiment, the connection enhancement member 125 can be firmly attached to the canopy portion 120 through its end portion 125A, and can be detachably connected to the box body portion 110 through its end portion 125B. However, as an alternative, the end portion 125A of the connection enhancement member 125 can be detachably connected to the canopy portion 120 by, for example, various buckle fasteners or snap fasteners. Furthermore, in this embodiment, six connection enhancement members 125 are symmetrically arranged on the canopy portion 120, with one connection enhancement member 125 arranged on each short side and two connection enhancement members 125 arranged on each long side, thereby providing an enhanced, stable and uniform connection between the canopy portion 120 and the box body portion 110, but the present disclosure is not limited thereto. In alternative embodiments, the number and position of the connection enhancement members may be different from the embodiments shown in FIG. 1A and FIG. 1B, depending on the actual design and application of the carrier.

According to the present disclosure, the connection enhancement member 125 provides an additional connection between the canopy portion 120 and the box body portion 110, such that when the carrier 100 carrying the animal is impacted or hit by an external collision, the additional connection provided by the connection enhancement member 125 can prevent the canopy portion 120 from being detached from the box body portion 110, thereby preventing the animal in the carrier 100 from "flying out" from the carrier 100, thereby improving the safety of the animal in the carrier.

Please Refer to FIG. 2, which schematically shows a side view of a carrier 200 of a travel device according to an exemplary embodiment of the present disclosure. The travel device includes a carrier 200, and the carrier 200 is configured to accommodate an animal therein. The carrier 200 has a structure and a configuration similar to those of the carrier 100 shown in FIG. 1A and FIG. 1B. The carrier 200 includes a box body portion 210, a canopy portion 220 detachably attached to the box body portion 210, a lifting handle 230 pivotably and detachably connected to opposite sides of the box body portion 210, and a bracket assembly 240 connected to an outer bottom portion of the box body portion 210.

The difference between the carrier 200 and the carrier 100 shown in FIG. 1A and FIG. 1B is that, in this embodiment, the canopy portion 220 is mainly composed of an integral (also called a one-piece) cover and is attached to the box body portion 210 at its lower periphery 220A, and a zipper as a connection component is not used.

More specifically, the canopy portion 220 includes a plurality of (six in this embodiment) connection enhancement members 225 connected to the cover and extending from the lower periphery 220A. The connection enhancement member 225 extends toward the box body portion 210 and is connected to an outer side of a side wall of the box body portion 210 in a similar manner to that of the connection enhancement member 125. In this embodiment, the connection enhancement member 225 may be integrally formed with the canopy portion 220. That is, the six connection enhancement members 225 in this embodiment form an integral structure with the canopy portion 220 and are unremovable therefrom, thereby further improving the connection between the canopy portion 220 and the box body portion 210. In this embodiment, the canopy portion 220 may be attached to the box body portion 210 only through the connection enhancement members 225. Alternatively, in addition to the connection enhancement members 225, the canopy portion 220 may be additionally attached to the box body portion 210 at its periphery through an optional connector.

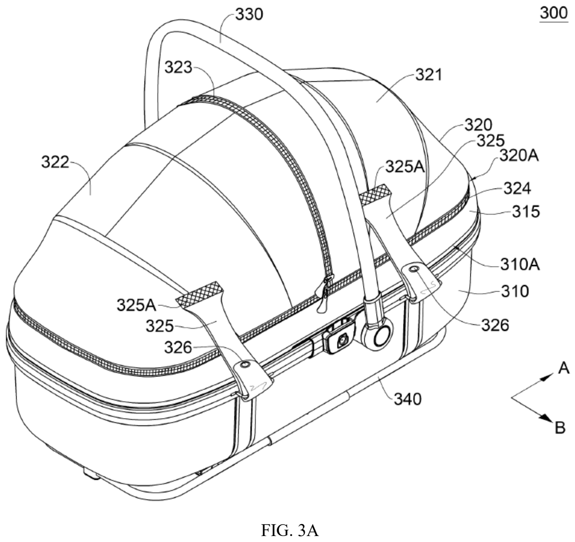

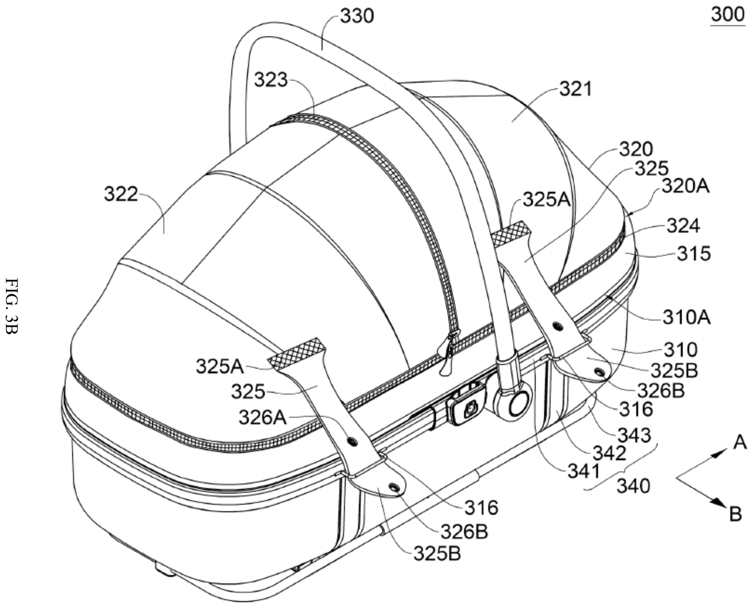

Please refer to FIG. 3A and FIG. 3B, which schematically shows perspective views of a carrier 300 of a travel device according to an exemplary embodiment of the present disclosure. The travel device includes a carrier 300, and the carrier 300 is configured to accommodate an animal therein. The carrier 300 has a structure and a configuration similar to those of the carrier 100 shown in FIG. 1A and FIG. 1B. The carrier 300 includes a box body portion 310, a canopy portion 320 attached to a seat cover 315 and thus attached to the box body portion 310 through a second connection component 324 (e.g., a zipper), a lifting handle 330 pivotably and detachably connected to opposite sides of the box body portion 310, and a bracket assembly 340 connected to the box body portion 310. Similarly, the canopy portion 320 in this embodiment may include a first (right) cover 321 and a second (left) cover 322, and the first (right) cover 321 and the second (left) cover 322 are detachably connected to each other through a first connection component 323 (e.g., a zipper), such that the canopy portion 320 can be formed into a dome shape, and be detachably connected to an upper periphery 310A of the box body portion 310 through a second connection component 324 (e.g., a zipper or a fastener) at its lower periphery 320A. It should be noted that the portion of the seat cover 315 located below the upper periphery 310A of the box body portion 310 is omitted in FIG. 3A and FIG. 3B, so as to explain in detail the connection between the connection enhancement members and the box body portion 310 according to this embodiment.

The difference between the carrier 300 and the carrier 100 shown in FIG. 1A and FIG. 1B is that, in this embodiment, the canopy portion 320 may be further fixed to the box body portion 310 through a plurality of connection enhancement members 325 in combination with corresponding retaining rings 316 arranged on the bracket assembly 340. Specifically, each of the connection enhancement members 325 is fixedly or detachably connected to the canopy portion 320 through its end portion (i.e., a first end portion) 325A and extends from the canopy portion 320. The end portion (i.e., a second end portion) 325B of each of the connection enhancement members 325 is provided with a pair of snap fasteners 326, and the snap fasteners 326 include corresponding snap fasteners 326A and 326B that cooperate with each other. The bracket assembly 340 includes a first frame 341 surrounding an outer side of an upper periphery of the box body portion 310, a second frame 343 arranged at an outer bottom portion of the box body portion 310, and at least one connection frame 342. The connection frame 342 is connected to the outside of the box body portion 310, and is connected between the first frame 341 and the second frame 343. The first frame 341 and the connection frame 342 have respective contours corresponding to the contour of the box body portion 310, such that when they are connected to the box body portion 310, they can support the box body portion 310 in a relatively stable and firm manner. The second frame 343 is connected to the outside of the box body portion 310, and the second frame 343 allows the carrier 300 to be attached to the base mounted in the vehicle through the second frame 343. Further, the bracket assembly 340 is provided with a plurality of U-shaped retaining rings 316, and each of the retaining rings 316 is attached to the first frame 341, preferably attached at a position where the connection frame 342 is connected to the first frame 341, to form an opening for receiving the corresponding connection enhancement member 325 extending from the canopy portion 320. As shown in FIG. 3A and FIG. 3B, for the connection enhancement member 325 extending from the canopy portion 320, its end portion 325B is capable of passing through the opening formed by the corresponding retaining ring 316 and the first frame 341, and then reverse toward the canopy portion 320, thereby allowing the snap fastener 326B to be connected to the snap fastener 326A in a pressing or snapping manner. In this way, the connection between the canopy portion 320 and the box body portion 310 can be improved. Alternatively, the retaining ring 316 may also have other shapes and configurations other than the U-shaped ring, including but not limited to a D-shaped ring, a V-shaped ring, an O-shaped ring, with or without an opening portion.

In this embodiment, four connection enhancement members 325 are symmetrically arranged on the canopy portion 320, and two connection enhancement members 325 are arranged on each long side, thereby providing an enhanced, stable and uniform connection between the canopy portion 320 and the box body portion 310, but the present disclosure is not limited thereto. In alternative embodiments, the number and positions of the connection enhancement members may be different from the embodiments shown in FIG. 3A and FIG. 3B, depending on the actual design and application of the carrier.

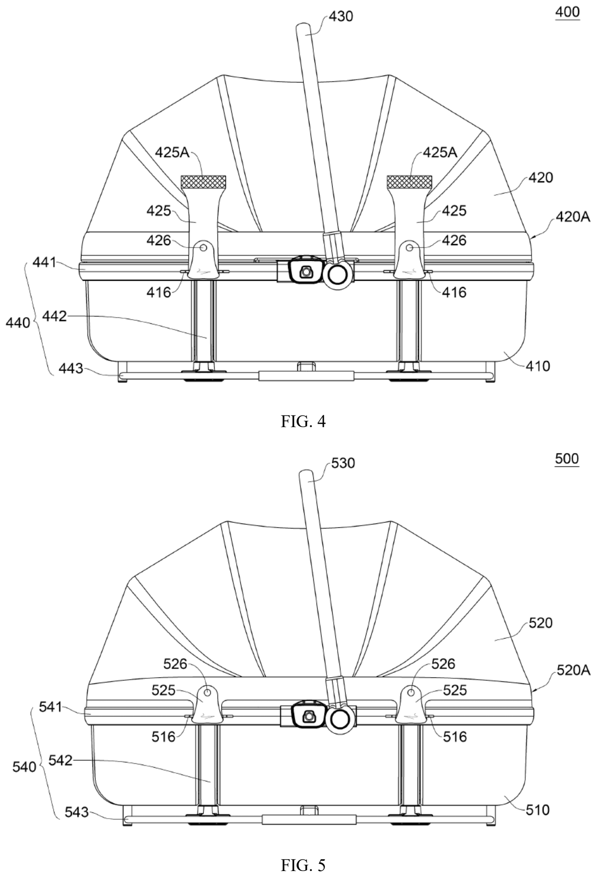

Please refer to FIG. 4, which schematically shows a side view of a carrier 400 of a travel device according to an exemplary embodiment of the present disclosure. The travel device includes a carrier 400, and the carrier 400 is configured to accommodate an animal therein. The carrier 400 has a structure and a configuration similar to those of the carrier 200 shown in FIG. 2. The carrier 400 includes a box body portion 410, a canopy portion 420 detachably attached to the box body portion 410, a lifting handle 430 pivotably and detachably connected to opposite sides of the box body portion 410, and a bracket assembly 440 connected to the box body portion 410. In the present disclosure, the first frame 441 and the connection frame 442 of the bracket assembly 440 have respective contours corresponding to the contour of the box body portion 410, such that when they are connected to the box body portion 410, they can support the box body portion 410 in a relatively stable and firm manner. The second frame 443 is connected to the outside of the box body portion 410, and the second frame 443 allows the carrier 400 to be attached to the base mounted in the vehicle through the second frame 443. The canopy portion 420 has a lower periphery 420A.

The difference between the carrier 400 and the carrier 200 shown in FIG. 2 is that, the canopy portion 420 mainly formed by an integrated cover is attached to the box body portion 410 only through connection enhancement members 425. More specifically, the carrier 400 includes four connection enhancement members 425 symmetrically arranged on the canopy portion 420, with two connection support members arranged on each long side. The connection enhancement member 425 is fixedly or detachably connected to the canopy portion 420 through its end portion (i.e., a first end portion) 425A, and extends from the canopy portion 420. In addition, the bracket assembly 440 is provided with a plurality of U-shaped retaining rings 416, and each of the retaining rings 316 is attached to the first frame 441, preferably attached at a position where the connection frame 442 is connected to the first frame 441, to form an opening for receiving the corresponding connection enhancement member 425 extending from the canopy portion 420. As shown in FIG. 4, each of the connection enhancement members 425 extending from the canopy portion 420 is capable of passing through the opening formed by the corresponding retaining ring 416 and the first frame 441, and then reverse toward the canopy portion 420, thereby allowing the matching and corresponding snap fastener pair 426 configured at a free end (i.e., a second end portion) of the connection reinforcement member 425 to be connected to each other by pressing or snapping. In this way, the connection between the canopy portion 420 and the box body portion 410 can be improved.

Please refer to FIG. 5, which schematically shows a side view of a carrier 500 of a travel device according to an exemplary embodiment of the present disclosure. The travel device includes a carrier 500, and the carrier 500 is configured to accommodate an animal therein. The carrier 500 has a structure and a configuration similar to those of the carrier 500 shown in FIG. 2. The carrier 500 includes a box body portion 510, a canopy portion 520 detachably attached to the box body portion 510, a lifting handle 530 pivotably and detachably connected to opposite sides of the box body portion 510, and a bracket assembly 540 connected to the box body portion 510. In the present disclosure, the first frame 541 and the connection frame 542 of the bracket assembly 540 have respective contours corresponding to the contour of the box body portion 510, such that when they are connected to the box body portion 510, they can support the box body portion 510 in a relatively stable and firm manner. The second frame 543 is connected to the outside of the box body portion 510, and the second frame 543 allows the carrier 500 to be attached to the base mounted in the vehicle through the second frame 543. Similarly, the canopy portion 520 is mainly formed by an integral cover, and is attached to the box body portion 510 at its lower periphery 520A, and a zipper as a connection component is not used.

The difference between the carrier 500 and the carrier 200 shown in FIG. 2 is that, in this embodiment, the carrier 500 includes four connection enhancement members 525 symmetrically arranged on the canopy portion 520, with two connection enhancement members 525 arranged on each long side. In addition, the bracket assembly 540 is provided with a plurality of U-shaped retaining rings 516, and each of the retaining rings 516 is attached to the first frame 541, preferably attached at a position where the connection frame 542 is connected to the first frame 541, so as to form an opening for receiving the corresponding connection enhancement member 525 extending from the canopy portion 520. In this embodiment, the connection enhancement members 225 may be integrally formed with the canopy portion 220. That is, the four connection enhancement members 525 in this embodiment form an integral structure with the canopy portion 520, and are unremovable therefrom. As shown in FIG. 5, each of the connection enhancement members 525 extending from the canopy portion 520 can pass through the opening formed by the corresponding retaining ring 516 and the first frame 541, and then reverse toward the canopy portion 520, thereby allowing the matching and corresponding snap fastener pair 526 configured at the free end of the connection enhancement member 525 to be connected to each other by pressing or snapping. In this way, the connection between the canopy portion 520 and the box body portion 510 can be improved.

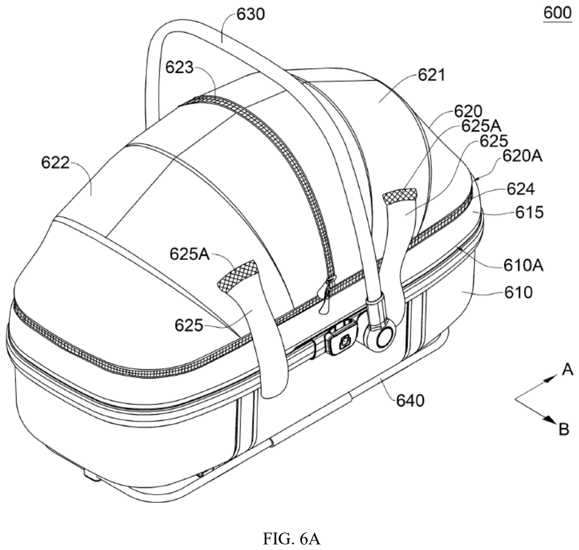

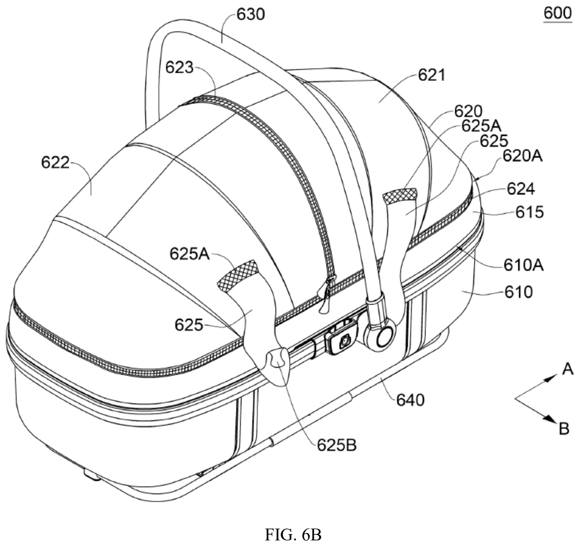

Please refer to FIG. 6A to FIG. 6C, which schematically shows perspective views of a carrier of a travel device according to an exemplary embodiment of the present disclosure. The travel device includes a carrier 600, and the carrier 600 is configured to accommodate an animal therein. The carrier 600 has a structure and a configuration similar to those of the carrier 300 shown in FIG. 3A and FIG. 3B. The carrier 600 includes a box body portion 610, a canopy portion 620 attached to the seat cover 615 and thus attached to the box body portion 310 through a second connection component 624 (e.g., a zipper), a lifting handle 630 pivotably and detachably connected to opposite sides of the box body portion 610, and a bracket assembly 640 connected to the box body portion 610. Similarly, the canopy portion 620 in this embodiment may include a first (right) cover 621 and a second (left) cover 622, and the first (right) cover 621 and the second (left) cover 622 are detachably connected to each other through a first connection component 623 (e.g., a zipper), such that the canopy portion 620 can be formed into a dome shape, and be detachably connected to an upper periphery 610A of the box body portion 610 through a second connection component 624 (e.g., a zipper or a fastener) at its lower periphery 620A. Similarly, in the present disclosure, the first frame 641 and the connection frame 642 of the bracket assembly 640 have respective contours corresponding to the contour of the box body portion 610, such that when they are connected to the box body portion 610, they can support the box body portion 610 in a relatively stable and firm manner. The second frame 643 is connected to the outside of the box body portion 610, and the second frame 643 allows the carrier 600 to be attached to the base mounted in the vehicle through the second frame 643.

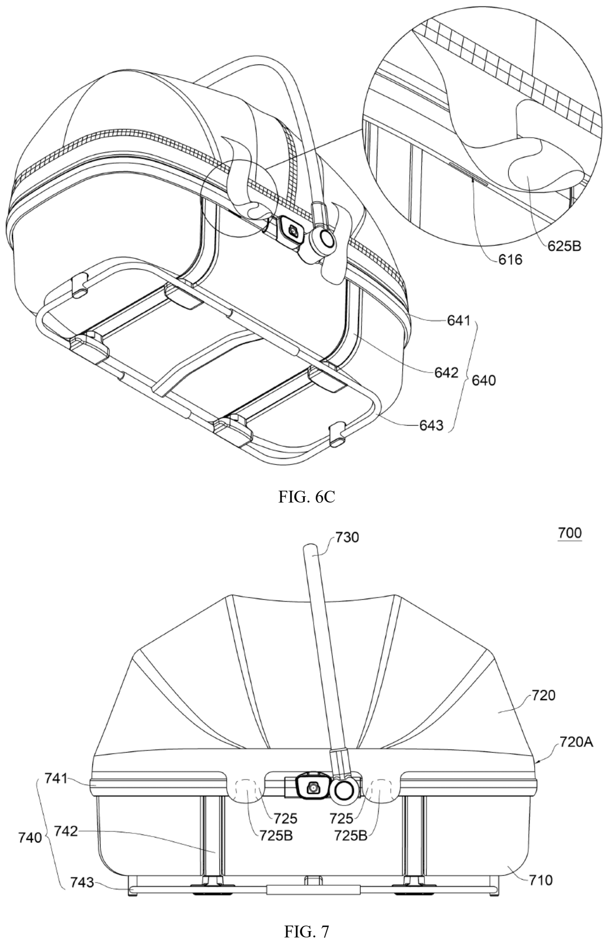

The difference between the carrier 600 and the carrier 300 shown in FIG. 3A and FIG. 3B is that, in this embodiment, the connection enhancement member 625 extending from the canopy portion 620 of the carrier 600 can be attached to the box body portion 610 without any additional means for connection (e.g., the snap fastener). The first frame 641 of bracket assembly 640 is formed to have a concave portion 616 (as shown in FIG. 6C) at a position toward which the corresponding connection enhancement member 625 extends, replacing the U-shaped retaining ring attached to the first frame 641. Each of the connection enhancement members 625 may be formed to have a rigid hook-shaped end portion. That is, each of the connection enhancement members 625 can have its one end portion (i.e., the first end portion) 625A be fixedly or detachably connected to the canopy portion 620, and have its the other end portion (i.e., the second end portion) 625B be formed into a rigid hook-shaped end portion, the hook-shaped end portion is configured to be received by the corresponding concave portion 616 on the first frame 641 of the bracket assembly 640 for engagement. In this way, the connection between the canopy portion 620 and the box body portion 610 can be improved by engaging the connection enhancement members 625 with the respective concave portions 616, without using any additional fasteners or connectors, thereby providing a relatively simplified configuration for the carrier 600.

Please refer to FIG. 7, which schematically shows a side view of a carrier 700 of a travel device according to an exemplary embodiment of the present disclosure. The travel device includes a carrier 700, and the carrier 700 is configured to accommodate an animal therein. The carrier 700 has a structure and a configuration similar to those of the carrier 500 shown in FIG. 5. The carrier 700 includes a box body portion 710, a canopy portion 720 detachably attached to the box body portion 710, a lifting handle 730 pivotably and detachably connected to opposite sides of the box body portion 710, and a bracket assembly 740 connected to the box body portion 710. In the present disclosure, the first frame 741 and the connection frame 742 of the bracket assembly 740 have respective contours corresponding to the contour of the box body portion 710, such that when they are connected to the box body portion 710, they can support the box body portion 710 in a relatively stable and firm manner. The second frame 743 is connected to the outside of the box body portion 710, and the second frame 743 allows the carrier 700 to be attached to the base mounted in the vehicle through the second frame 743. Similarly, the canopy portion 720 is mainly formed by an integral cover, and is attached to the box body portion 710 at its lower periphery 720A, and a zipper as a connection component is not used.

The difference between the carrier 700 and the carrier 500 shown in FIG 5 is that, in this embodiment, the connection enhancement members 725 extending from the canopy portion 720 of the carrier 700 can be attached to the box body portion 710 without any additional means for connection (e.g., the snap fastener). In this embodiment, the connection enhancement members 725 may be integrally formed with the canopy portion 720. That is, the four connection enhancement members 725 in this embodiment form an integral structure with the canopy portion 720 and are unremovable therefrom. Similar to the carrier 600 shown in FIG. 6A to FIG. 6C, the first frame 741 of the bracket assembly 740 is formed to have a concave portion (not shown in the present figures) at a position toward which the corresponding connection enhancement member 725 extends. Each of the connection enhancement members 725 may be formed to have a rigid hook-shaped end portion 725B, the hook-shaped end portion 725B may be received by a corresponding concave portion on the first frame 741 of the bracket assembly 740 for engagement, instead of passing through an opening formed by a U-shaped retaining ring attached to the first frame 741. In this way, the connection between the canopy portion 720 and the box body portion 710 can be improved by engaging the connection enhancement members 725 with the respective concave portions, without using any additional fasteners or connectors, thereby providing a relatively simplified configuration for the carrier 700.

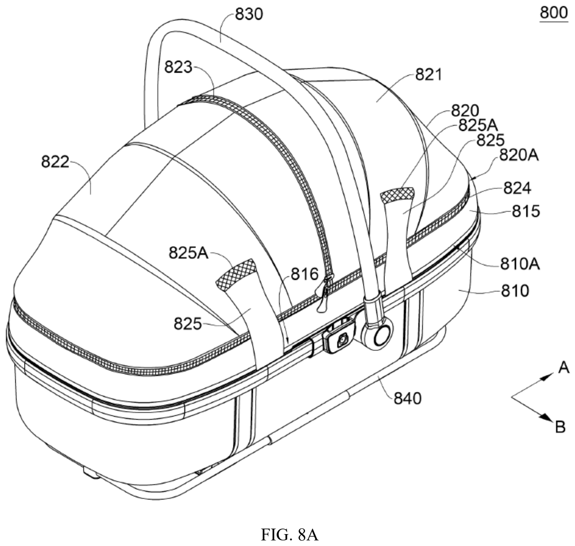

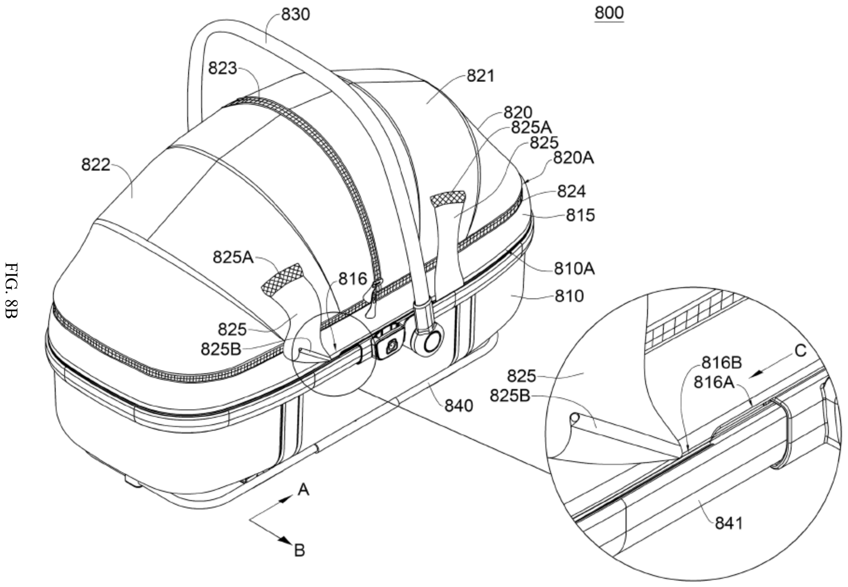

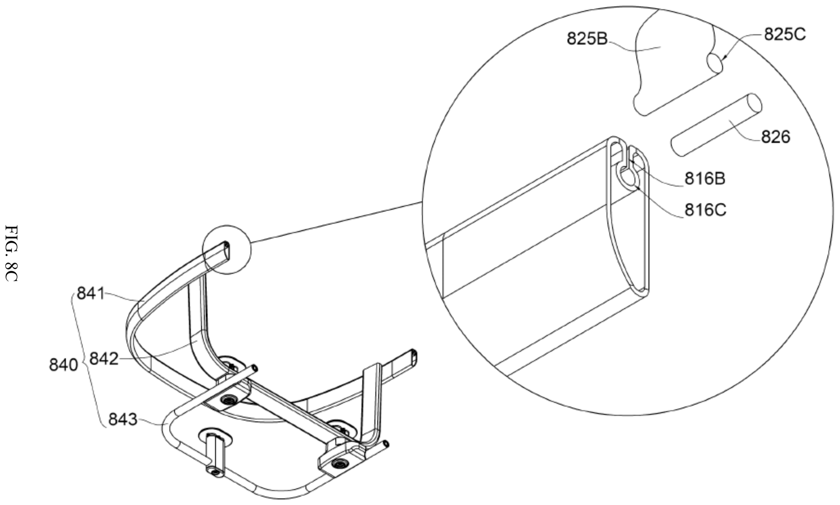

Please refer to FIG. 8A to FIG. 8C, which schematically shows a carrier 800 of a travel device according to an exemplary embodiment of the present disclosure. FIG. 8A and FIG. 8B show perspective views of the connection enhancement member 825 being attached to and being detached from the box body portion 810 of the carrier 800, and FIG. 8C schematically shows the structure of the connection enhancement member and the structure of the guide groove formed on the first frame 841.

The travel device includes a carrier 800 configured to accommodate an animal therein. The carrier 800 has a structure and a configuration similar to those of the carrier 600 shown in FIG. 6A to FIG. 6C. The carrier 800 includes a box body portion 810, a canopy portion 820 attached to the seat cover 815 and thus attached to the box body portion 810 through a second connection component 824 (e.g., a zipper), a lifting handle 830 pivotably and detachably connected to opposite sides of the box body portion 810, and a bracket assembly 840 connected to the box body portion 810. Similarly, the canopy portion 820 in this embodiment may include a first (right) cover 821 and a second (left) cover 822, the first (right) cover 821 and the second (left) cover 822 are detachably connected to each other through a first connection component 823 (e.g., a zipper), such that the canopy portion 820 can be formed into a dome shape and be detachably connected to an upper periphery 810A of the box body portion 810 through a second connection component 824 (e.g., a zipper or a fastener) at its lower periphery 820A. Similarly, in this embodiment, the first frame 841 and the connection frame 842 of the bracket assembly 840 have respective contours corresponding to the contour of the box body portion 810, such that when they are connected to the box body portion 810, they can support the box body portion 810 in a relatively stable and firm manner. The second frame 843 is connected to the outside of the box body portion 810, and the second frame 843 allows the carrier 800 to be attached to the base mounted in the vehicle through the second frame 843.

The difference between the carrier 800 and the carrier 600 shown in FIG. 6A to FIG. 6C is that, in this embodiment, the first frame 841 of the bracket assembly 840 is formed to have a guide groove (also called a first guide groove) 816, the guide groove 816 is configured to receive, guide and limit the corresponding connection enhancement member 825. More specifically, as shown in FIG. 8B and FIG. 8C, the guide groove 816 is provided on the first frame 841, on an upward side, and may be formed to include a first (receiving) portion 816A, a second (guiding) portion 816B and a third (limiting) portion 816C. The first (receiving) portion 816A and the second (guiding) portion 816B are open to receive a junction end (i.e., a second end portion) 825B of the connection enhancement member 825 and guide the main body of the connection enhancement member 825. The connection enhancement member 825 is formed to have a sleeve portion 825C at the junction end 825B, and the sleeve portion 825C is configured to accommodate a guide rod (also called a first guide rod) 826 therein. A shape and a size of the guide rod 826 correspond to the limiting portion 816C of the guide groove 816, such that the junction end 825B having the guide rod 826 can be guided to move smoothly and be limited in the limiting portion 816C of the guide groove 816. In this embodiment, as shown in the enlarged view of FIG. 8B, the first receiving portion 816A of the guide groove 816 can be tapered, for example, from right to left (or vice versa). That is, the first portion 816A is formed to have a starting (e.g., right) end and a tapered (e.g., left) end, a size and a shape of the starting end allow the reception of the junction end 825B having the guide rod 826, the tapered (e.g., left) end is spatially connected to the second (guide) portion 816B, and a size and a shape of the second (guide) portion 816B correspond to a thickness of the main body of the connection enhancement member 825. In this way, only the main body of the connection enhancement member 825 is allowed to move into the second portion 816B of the guide groove 816. The junction end 825B having the guide rod 826 is received by the first (receiving) portion 816A and moves along the direction C until it completely enters the second (guide) portion 816B of the guide groove 816, and the guide rod 826 is then restricted in the third (limiting) portion 816C and is prohibited from moving out of the guide groove 816 through the second (guide) portion 816B.

Please refer to FIG. 8A and FIG. 8C, the connection of the connection enhancement member 825 and the box body portion 810 is shown. The carrier 800 is provided with four connection enhancement members 825, each of which is connected to the canopy portion 820 through an end portion (i.e., a first end portion) 825A and extends from the canopy portion 820. As described above, in this embodiment, the first frame 841 of the bracket assembly 840 includes guide grooves 816 each of which is formed by a first (receiving) portion 816A (which is tapered from right to left), a second (guiding) portion 816B, and a third (limiting) portion 816C. By loading the junction end 825B into the right (starting) end of the first portion 816A along the direction C shown in FIG. 8B, positioning the junction end 825B having the guide rod 826 into the third portion 816C, and then moving the junction end 825B slightly toward the left (tapered) end of the first portion 816A (i.e., along the direction C shown in FIG. 8B) into place, each of the connection enhancement members 825 can be received and positioned in the guide groove 816. When the connection enhancement member 825 is received into place, the junction end 825B can be limited in the third portion 816C and can be prohibited from moving out of the guide groove 816. Thus, the connection enhancement members 825 are engaged with the first frame 841 of the bracket assembly 840, and thereby engaged with the box body portion 810, as shown in FIG. 8A. Thus, the connection between the canopy portion 820 and the box body portion 810 can be improved by engaging the connection enhancement members 825 with the respective guide grooves 816, without using any additional fasteners or connectors, thereby providing a relatively simplified configuration for the carrier 800 while achieving a relatively stronger connection compared to the previous embodiments.

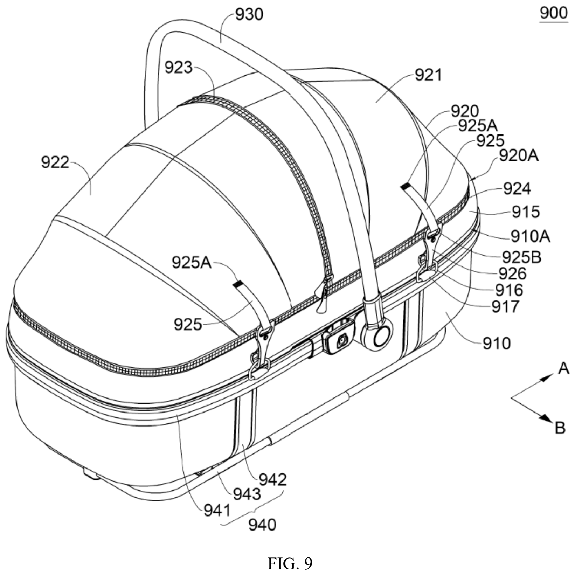

Please refer to FIG. 9, which schematically shows a perspective view of a carrier 900 of a travel device according to an exemplary embodiment of the present disclosure. The travel device includes a carrier 900, and the carrier 900 is configured to accommodate an animal therein. The carrier 900 has a structure and a configuration similar to those of the carrier 300 shown in FIG. 3A and FIG. 3B. The carrier 900 includes a box body portion 910, a canopy portion 920 attached to the seat cover 915 and thus attached to the box body portion 910 through a second connection component 924 (e.g., a zipper), a lifting handle 930 pivotably and detachably connected to opposite sides of the box body portion 910, and a bracket assembly 940 connected to the box body portion 910. Similarly, the canopy portion 920 in this embodiment may include a first (right) cover 921 and a second (left) cover 922, and the first (right) cover 921 and the second (left) cover 922 are detachably connected to each other through a first connection component 923 (e.g., a zipper), such that the canopy portion 920 can be formed into a dome shape, and be detachably connected to an upper periphery 910A of the box body portion 910 through a second connection component 924 (e.g., a zipper or a fastener) at its lower periphery 920A. Similarly, in this embodiment, the first frame 941 and the connection frame 942 of the bracket assembly 940 have respective contours corresponding to the contour of the box body portion 910, such that when they are connected to the box body portion 910, they can support the box body portion 910 in a relatively stable and firm manner. The second frame 943 is connected to the outside of the box body portion 910, and the second frame 943 allows the carrier 900 to be attached to the base mounted in the vehicle through the second frame 943.

The difference between the carrier 900 and the carrier 300 shown in FIG. 3A and FIG. 3B is that, in this embodiment, the connection between the canopy portion 920 and the box body portion 910 is achieved by a connection of respective connection bands provided on the canopy portion 920 and the bracket assembly 940. Specifically, the carrier 900 includes four first connection bands 925 as connection enhancement members, an end portion (i.e., a first end portion of the connection enhancement member) 925A of each of the first connection bands 925 is connected to the canopy portion 920, and a free end (i.e., a second end portion of the connection enhancement member) 925B of each of the first connection band 925 is connected to a connector 926, which is, for example, a hook or a fastener. The carrier 900 also correspondingly includes two second connection bands 917 attached to the bracket assembly 940, each of the second connection bands 917 includes two free ends, and the two free ends are each connected to a retaining ring 916. The retaining rings 916 are each, for example, a D-shaped ring. The retaining rings 916 are exposed, such that each of the first connection bands 925 is connected to a retaining ring 916 through a respective connector 926. That is, the free end of the second connection band 917 is detachably connected to the second end portion of the first connection band 925. In this way, by connecting the four first connection bands 925 with the respective retaining rings 916 on the bracket assembly 940, the connection between the canopy portion 920 and the box body portion 910 of the carrier 900 can be further improved.

It is worth noting that the first connection bands 925 (each having a connector 926 on its free end 925B) can be replaced by the connection enhancement members 325 shown in FIG. 3A and FIG. 3B (and vice versa). The second connection bands 917 (each having respective retaining rings 916 on its two free ends) can also be replaced by the U-shaped retaining rings 316 attached to the first frame 341 shown in FIG. 3A and FIG. 3B. That is, by combining the manners shown in different embodiments of the present disclosure, the close connection manner between the canopy portion and the box body portion of the carrier can be modified.

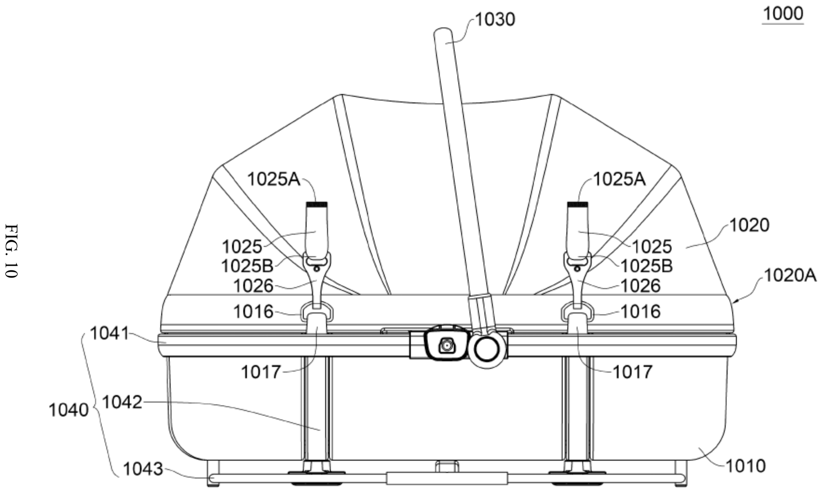

Please refer to FIG. 10, which schematically shows a side view of a carrier 1000 of a travel device according to an exemplary embodiment of the present disclosure. The travel device includes a carrier 1000, and the carrier 1000 is configured to accommodate an animal therein. The carrier 1000 has a structure and a configuration similar to those of the carrier 400 shown in FIG 4. The carrier 1000 includes a box body portion 1010, a canopy portion 1020 detachably attached to the box body portion 1010, a lifting handle 1030 pivotably and detachably connected to opposite sides of the box body portion 1010, and a bracket assembly 1040 connected to the box body portion 1010. In the present disclosure, the first frame 1041 and the connection frame 1042 of the bracket assembly 1040 have respective contours corresponding to the contour of the box body portion 1010, such that when they are connected to the box body portion 1010, they can support the box body portion 1010 in a relatively stable and firm manner. The second frame 1043 is connected to the outside of the box body portion 1010, and the second frame 1043 allows the carrier 1000 to be attached to the base mounted in the vehicle through the second frame 1043. Similarly, the canopy portion 1020 may be detachably connected to the box body portion 1010 only through the connection enhancement members 1025.

The difference between the carrier 1000 and the carrier 400 shown in FIG. 4 is that, the carrier 1000 includes four first connection bands 1025 as the connection enhancement members, each of the first connection bands 1025 is connected to the canopy portion 1020 through its end portion (i.e., a first end portion) 1025A, and each of the first connection bands 1025 is connected to the connector 1026 (e.g., a hook or a fastener) at its free end portion (i.e., a second end portion) 1025B. The carrier 1000 also correspondingly includes two second connection bands 1017. Each of the second connection bands 1017 are attached to the bracket assembly 1040, and each of the second connection bands 1017 has two free ends. The two free ends are connected to respective retaining rings 1016. In this embodiment, the connection between the canopy portion 1020 and the box body portion 1010 of the carrier 1000 can be further improved in a manner similar to that of the carrier 900, namely, by connecting the four first connection bands 1025 to the respective retaining rings 1016 on the bracket assembly 1040.

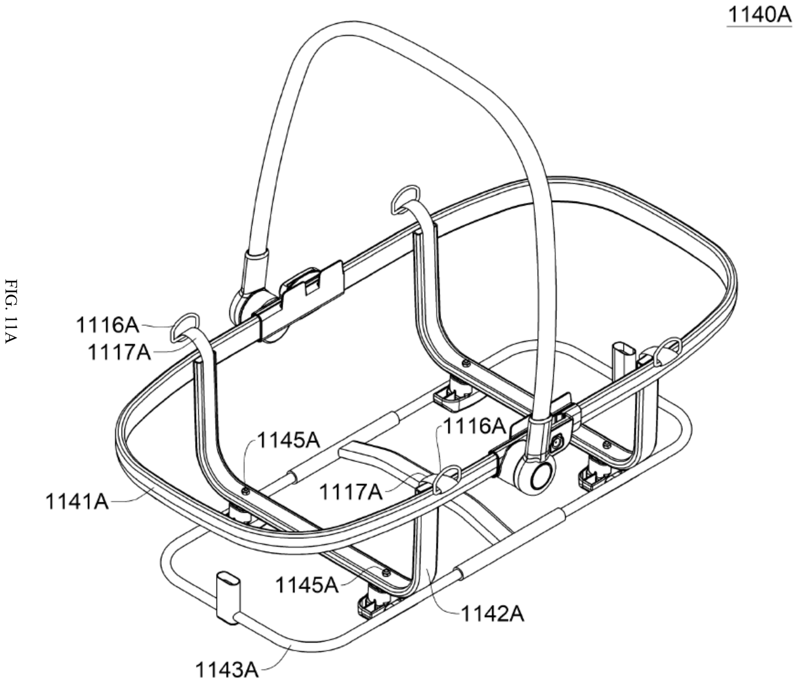

Please refer to FIG. 11A to FIG. 11D, which show perspective views of a bracket assembly according to various embodiments of the present disclosure, configured for use in the carrier as shown in FIG. 9 and 10, showing a first frame integrated with a connection band and a retaining ring.

Referring to FIG. 11A, the bracket assembly 1140A shown includes a first frame 1141A surrounding an outer side of an upper periphery of the box body portion (not shown), a second frame 1143A arranged at an outer bottom portion of the box body portion (not shown), and at least one (two in this embodiment) connection frame 1142A. The connection frame 1142 is connected to the outside of the box body portion 1110 and is connected between the first frame 1141 and the second frame 1143. The first frame 1141 and the connection frame 1142 have respective contours corresponding to the contour of the box body portion 1110, such that when they are connected to the box body portion 1110, they can support the box body portion 1110 in a relatively stable and firm manner. The second frame 1143A is connected to the outside of the box body portion, and the second frame 1143A allows a carrier (for example, but not limited to, the carrier 900 shown in FIG. 9 or the carrier 1000 shown in FIG. 10) to be attached to a base mounted in a vehicle. In this embodiment, each of the two second connection bands 1117A is attached to a surface of the respective connection frame 1142A that facing the outer bottom portion of the box body portion of the carrier, for example, through two fasteners 1145A. Each of the second connection bands 1117A extends along the connection frame 1142A, and its two free ends extend beyond the bracket assembly 1140A and are exposed at positions where the connection frame 1142A is connected to the first frame 1141A. The free ends of the second connection band pass through between the bracket assembly and the box body portion. More specifically, the two free ends of each of the second connection bands 1117A pass through between the box body portion and the first frame 1141A. Each of the second connection bands 1117A includes two retaining rings 1116A connected to its two free ends, so as to allow the corresponding first connection bands extending from the canopy portion to be connected thereto.

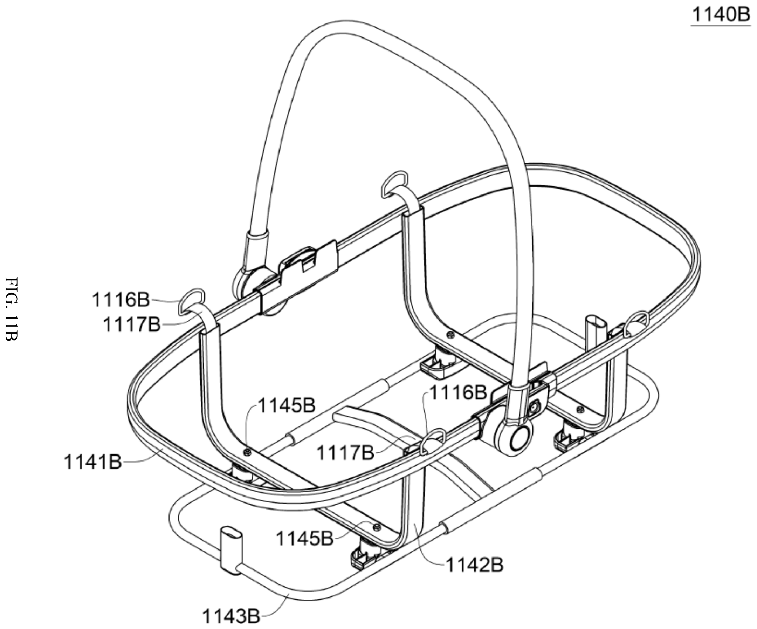

Referring to FIG. 11B, the bracket assembly 1140B shown has a structure and a configuration similar to those of the bracket assembly 1140A, including a first frame 1141B, a second frame 1143B, and at least one (two in this embodiment) connection frame 1142B. When the bracket assembly 1140B is connected to the box body portion, it can support the box body portion in a relatively stable and solid manner, and allow a carrier (such as, but not limited to, the carrier 900 shown in FIG. 9 or the carrier 1000 shown in FIG. 10) to be attached to a base mounted in a vehicle. In this embodiment, the connection frame 1142B is hollow, defining an internal space (also referred to as a hollow channel) that allows the respective second connection band 1117B to pass through. Each of the second connection bands 1117B extends along the connection frame 1142B in the internal space of the connection frame 1142B (i.e., extends along the hollow channel), and is attached to an inner surface of the respective connection frame 1142B, for example, through two fasteners 1145B. Each of the second connection bands 1117B extends along the connection frame 1142B, and its two free ends extend beyond the bracket assembly 1140B and are exposed at positions where the connection frame 1142B is connected to the first frame 1141B (i.e., are exposed from ends of the hollow channel). Similarly, each of the second connection bands 1117B includes two retaining rings 1116B connected to its two free ends, so as to allow the corresponding first connection bands extending from the canopy portion to be connected thereto.

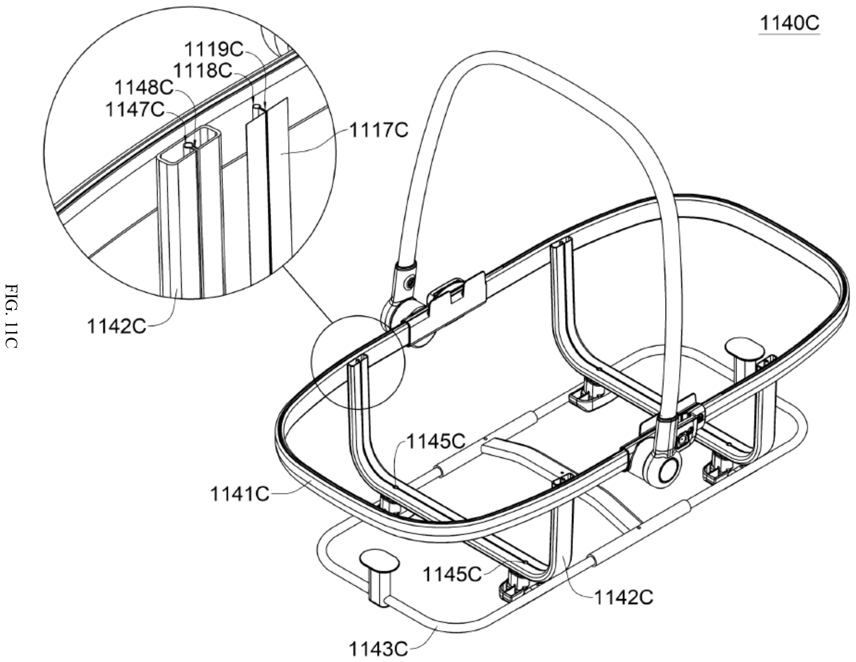

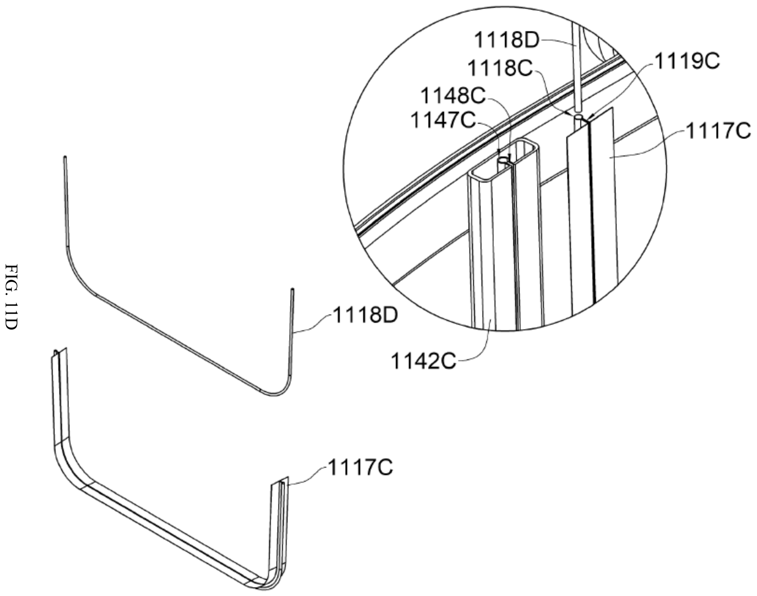

Referring to FIG. 11C and FIG. 11D, the bracket assembly 1140C shown has a structure and a configuration similar to those of the bracket assemblies 1140A and 1140B, including a first frame 1141C, a second frame 1143C, and at least one (two in this embodiment) connection frame 1142C. When the bracket assembly 1140B is connected to the box body portion, it can support the box body portion in a relatively stable and solid manner, and allow a carrier (such as, but not limited to, the carrier 900 shown in FIG. 9 or the carrier 1000 shown in FIG. 10) to be attached to a base mounted in a vehicle.

In this embodiment, each of the second connection bands 1117C can be formed to have a receiving groove, and the receiving groove includes a first portion 1118C and a second portion 1119C, and the receiving groove is open to receive a guide rod (also referred to as a second guide rod), such as a guide rod 1118D. The second connection band 1117C includes a guide rod 1118D embedded therein, for example, by pressing the guide rod 1118D through the second portion 1119C and loading the guide rod 1118D into the first portion 1118C of the second connection band 1117C. In addition, each of the connection frames 1142C can be formed to have a guide groove (also referred to as a second guide groove), and the guide groove includes a first (guide) portion 1147C and a second (receiving) portion 1148C. Preferably, a size and a shape of the first (guide) portion 1147C correspond to those of the guide rod 1118D, such that the guide rod 1118D is capable of being accommodated in the first (guide) portion 1147C and guided to move in the first (guide) portion 1147C. In this embodiment, the second connection band 1117C may be attached to the corresponding connection frame 1142C by being partially embedded in the corresponding connection frame 1142C, and the guide rod 1118D extends along the first portion 1147C of the connection frame 1142C and is located within the first portion 1147C. Optionally, the second connection band 1117C may be further fixed to the corresponding connection frame 1142C through, for example, two additional fasteners 1145C. Each of the second connection bands 1117C extends along the connection frame 1142C, and its two free ends extend beyond the bracket assembly 1140C and are exposed at positions where the connection frame 1142C is connected to the first frame 1141C. Similarly, each of the second connection bands 1117C includes two retaining rings (not shown) connected to its two free ends, so as to allow the corresponding first connection bands extending from the canopy portion to be connected thereto.

In some embodiments, the guide rod 1118D can be sleeved in the first portion 1118C of the second connection band 1117C. One end of the first portion 1118C having the guide rod 1118D is inserted into the first portion 1147C from an opening at an end of the first portion 1147C of the connection frame 1142C, and then the guide rod 1118D and the first portion 1118C slide along the first portion 1147C to form a U shape consistent with that of the connection frame 1142C.

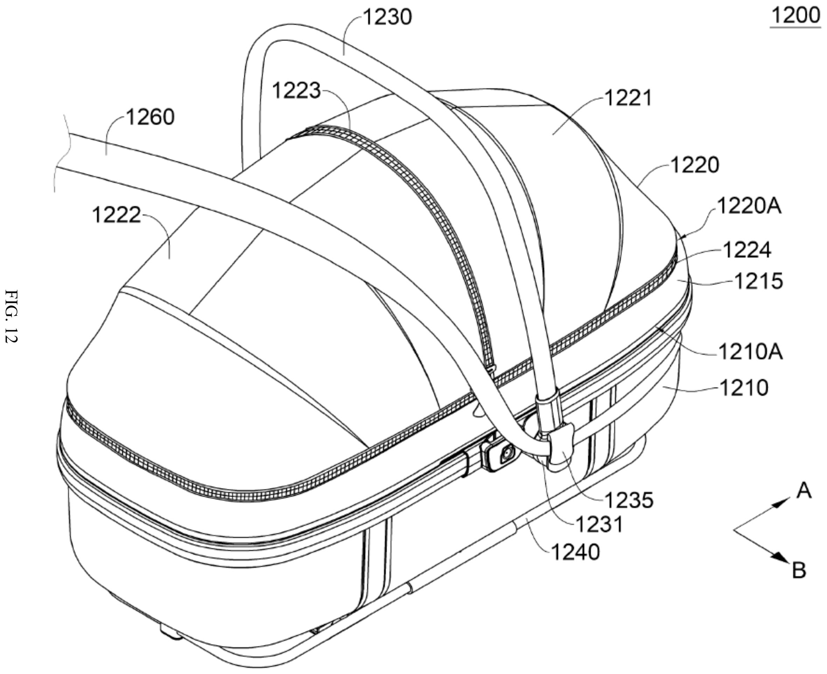

Please refer to FIG. 12, which schematically shows a side view of a carrier 1200 of a travel device according to an exemplary embodiment of the present disclosure. The carrier 1200 is configured to accommodate an animal, and its structure and configuration are similar to those of the aforementioned embodiments. The carrier 1200 includes a box body portion 1210, a canopy portion 1220 attached to the seat cover 1215 and thus attached to the box body portion 1210 through a second connection component 1224 (e.g., a zipper), a lifting handle 1230 pivotably and detachably connected to opposite sides of the box body portion 1210, and a bracket assembly 240 connected to the box body portion 1210. Similarly, the canopy portion 1220 in this embodiment may include a first (right) cover 1221 and a second (left) cover 1222, and the first (right) cover 1221 and the second (left) cover 1222 are detachably connected to each other through a first connection component 1223 (e.g., a zipper), such that the canopy portion 1220 can be formed into a dome shape, and be detachably connected to an upper periphery 1210A of the box body portion 910 through a second connection component 1224 (e.g., a zipper or a fastener) at its lower periphery 1220A. In this embodiment, the lifting handle 1230 is pivotally and detachably connected to opposite sides of the box body portion 1210 through the pivot shafts 1231, and the carrier 1200 further includes a guide member 1235 detachably connected to the carrier 1200, and the guide member 1235 is at a position corresponding to a pivot shaft 1231, and is configured to fasten a seat belt 1260 passing therethrough, thereby providing an additional support for the carrier 1200. Alternatively, the guide member 1235 may be attached to the lifting handle 1230 or the box body portion 1210 at a predetermined position. With the support of the seat belt, the carrier 1200 can be relatively stably and safely supported when mounted in the vehicle.

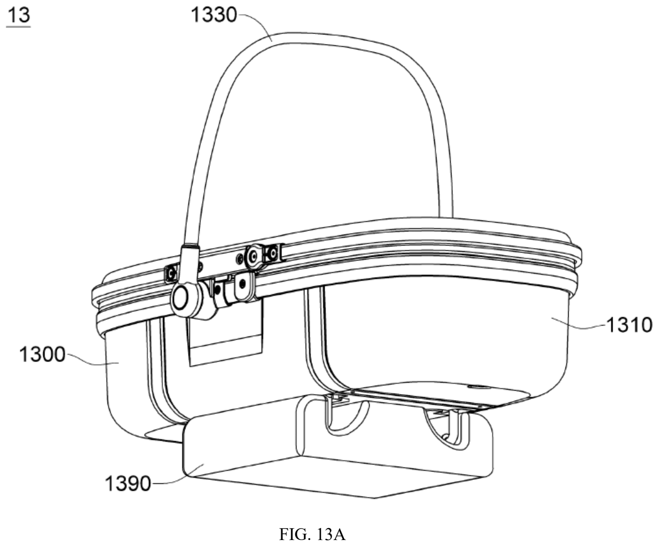

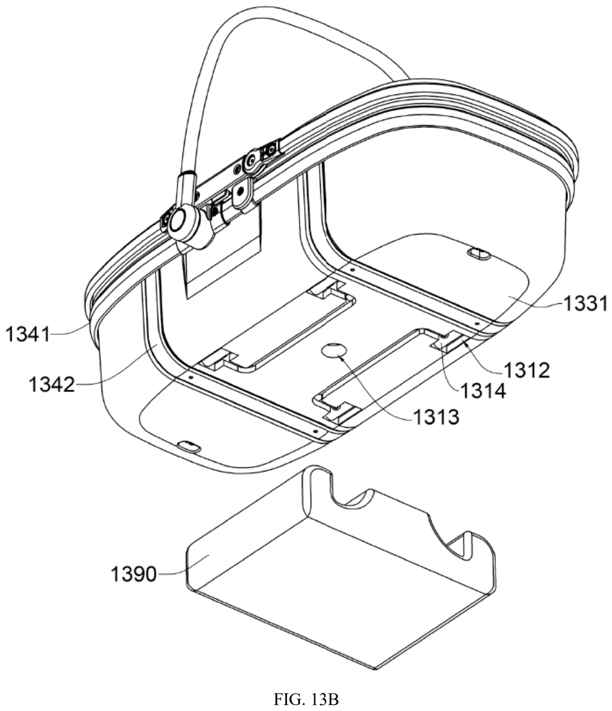

FIG. 13A to FIG. 13E schematically show different views of a travel device 13 according to an exemplary embodiment of the present disclosure. As shown in FIG. 13A and FIG. 13B, the travel device 13 includes a carrier 1300 and a base 1390. The carrier 1300 may be constructed in a manner similar to those of the aforementioned embodiments, including a box body portion 1310 and a lifting handle 1330 pivotably and detachably connected to opposite sides of the box body portion 1310.

In this embodiment, the carrier 1300 further includes a pair of connection rods 1314 connected to an outer bottom surface of the box body portion 1310 (i.e., an outer bottom portion of the carrier 1300). The carrier 1300 may be mounted on the base 1390 through the connection rods 1314, and the base 1390 may be, for example, fixed to a vehicle seat. In this embodiment, the box body portion 1310 includes a pair of recess portions 1312 formed on the outer bottom portion 1311 and an activation part (or actuation part) 1313 located at a center of the outer bottom portion 1311, the pair of recess portions 1312 are configured to receive the pair of connection rods 1314 therein respectively. Preferably, the connection rod 1314 may be U-shaped, and the connection rod 1314 may be pivotally connected to the box body portion 1310 through its two ends in the respective recess portion 1312.

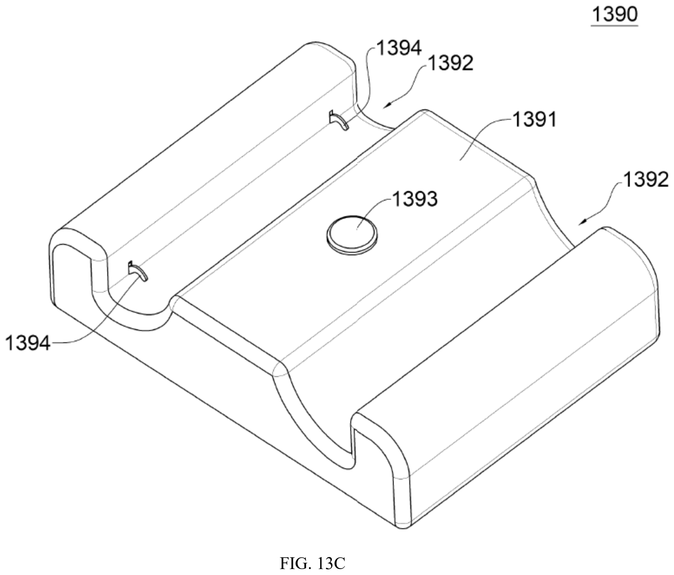

Now referring to FIG. 13B and FIG. 13C, the base 1390 includes a pair of connecting recesses 1392 corresponding to the pair of connection rods 1314 of the carrier 1300. On an inner surface of each of the connecting recesses 1392, the base 1390 has a pair of exposed connection components 1394. Alternatively, each of the connecting recesses 1392 may be provided with only one connection component 1394. The connection component 1394 may be, for example, a hook or a claw, and the connection component 1394 has an opening portion to allow the connection rod 1314 to pass through and be mounted therein. Each of the connecting recesses 1392 may have an inclined surface configured to guide the respective connection rod 1314. On a top surface 1391, i.e., a surface in contact with the outer bottom portion 1311 of the box body portion 1310, the base 1390 includes an activation part 1393 provided at the center, and the activation part 1393 corresponds to the activation part 1313 at the center of the outer bottom portion 1311. Preferably, the activation part 1313 at the center of the outer bottom portion 1311 of the carrier 1300 may be recessed to cover a trigger mechanism for the connection rod 1314, and the activation part 1393 at the center of the top surface 1391 of the base 1390 may be a column.

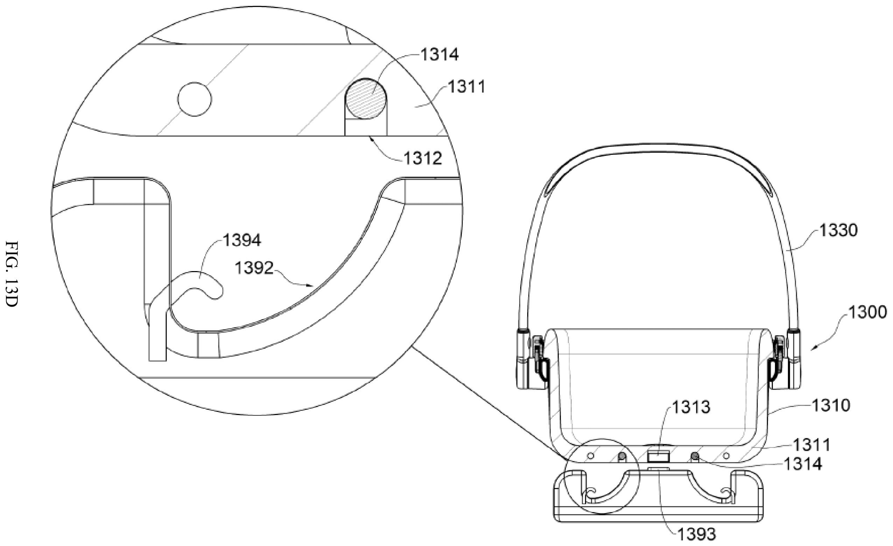

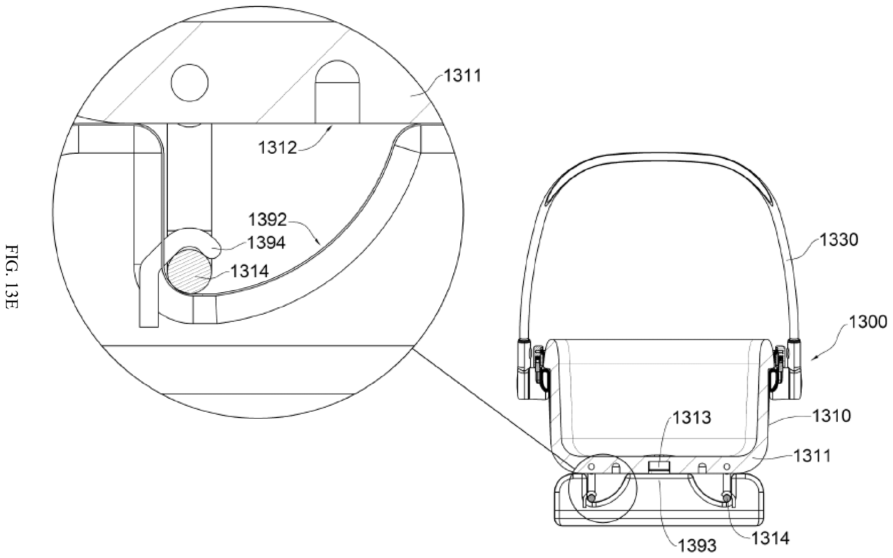

Please refer to FIG. 13D and FIG. 13E, which show the separation and connection of the carrier 1300 and the base 1390 according to this embodiment. As described above, the carrier 1300 can be detachably connected to the base 1390 through the pair of connection rods 1314 connected to the outer bottom surface of the box body portion 1310. The connection rods 1314 can be received in respective recess portions 1312 on the outer bottom portion 1311 of the carrier 1300, as shown in FIG. 13D. When the carrier 1300 is positioned on the base 1390 for connection, the trigger mechanism inside the activation part 1313 of the carrier can be pressed and triggered by the activation part 1393, causing the two connection rods 1314 to pivot out of respective recess portions 1312. The connection rods 1314 are capable of being guided to move along the inclined surfaces of the corresponding connection recesses 1392, pass through the opening portions and move into the respective connection components 1394, and be engaged therein as shown in FIG. 13E. Therefore, by the engagements of the connection rods 1314 with the connection components 1394, the carrier 1300 can be stably attached to the base 1390.

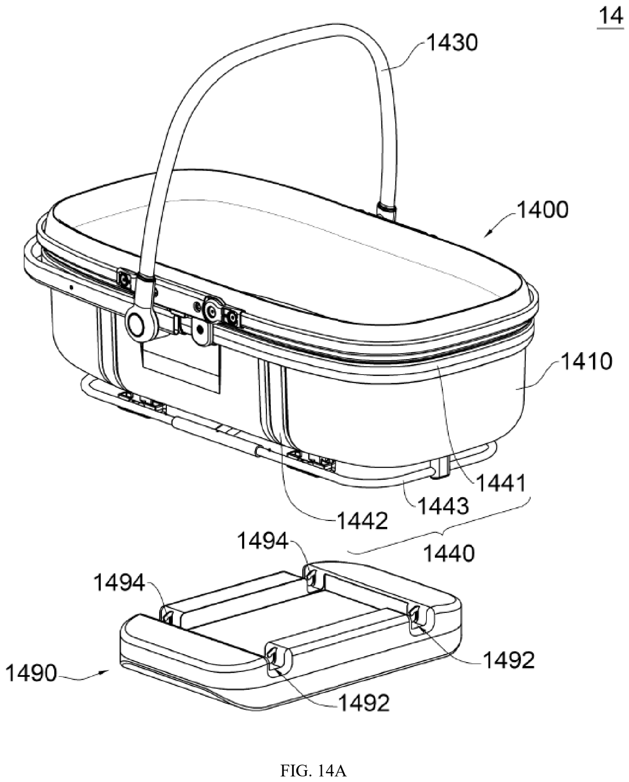

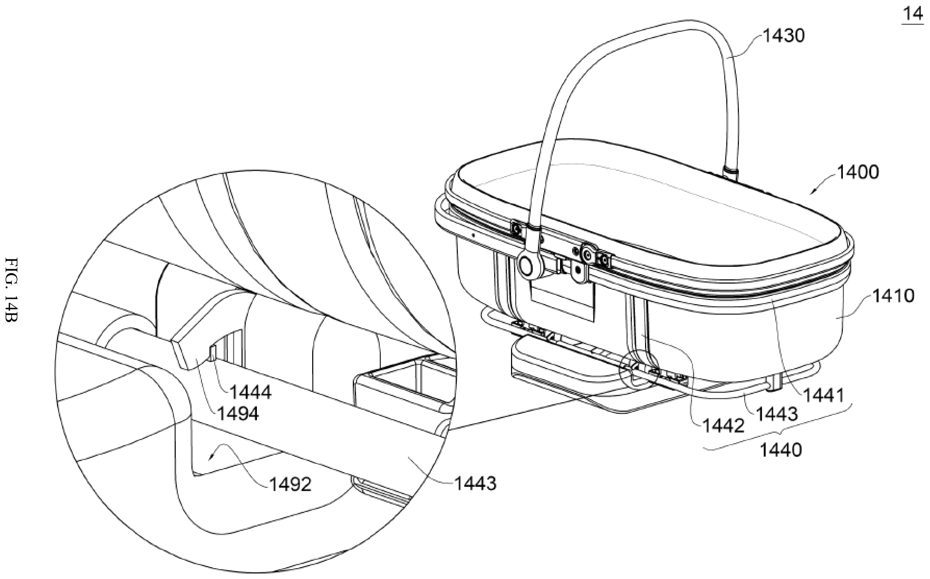

Please refer to FIG. 14A and FIG. 14B, which schematically show different views of the travel device 14 according to an exemplary embodiment of the present disclosure. The travel device 14 includes a carrier 1400 and a base 1490. The carrier 1400 may be constructed in a manner similar to the aforementioned embodiments, including a box body portion 1410, a lifting handle 1430 pivotably and detachably connected to opposite sides of the box body portion 1410, and a bracket assembly 1440 connected to the box body portion 1410. In this embodiment, the bracket assembly 1440 includes a first frame 1441, a second frame 1443 connected to the outer bottom portion of the box body portion 1410, and a connection frame 1442 connected between the first frame 1441 and the second frame 1443 and connected to the box body portion 1410. Similarly, the first frame 1441 and the connection frame 1442 of the bracket assembly 1440 have respective contours corresponding to the contour of the box body portion 1410, such that when they are connected to the box body portion 1410, they can support the box body portion 1410 in a relatively stable and firm manner. The second frame 1443 is connected to the outside of the box body portion 1410, so as to allow the carrier 1400 to be attached to the base 1490 through the second frame 1443.

In this embodiment, the base 1490 includes a plurality of connecting recesses 1492 configured to receive and connect the second frame 1443 of the carrier 1400. More specifically, the base 1490 may include a pair of connecting recesses 1492 corresponding to the two long sides of the second frame 1443 of the carrier 1400 (i.e., one long side corresponds to one connection recess 1492) respectively, or may include a pair of connecting recesses 1492 corresponding to each of the two long sides of the second frame 1443 of the carrier 1400 (i.e., one long side corresponds to a pair of connecting recesses 1492). On the inner surfaces of the respective connecting recesses 1492, the base 1490 includes two pairs of exposed connection components 1494, and a pair of connection components 1494 corresponds to one of the two long sides of the second frame 1443. The connection components 1494 may each be a hook or a claw, etc., and the connection components 1494 each has an opening portion, so as to allow the two long sides of the second frame 1443 to pass through the opening portions and be loaded therein. Each of the two long sides of the second frame 1443 is provided with a pair of connection columns 1444. Through a trigger mechanism disposed inside the second frame 1443, the connection columns 1444 are capable of extending out from the second frame 1443 and retracting into the second frame 1443. That is, in this embodiment, when the long sides of the second frame 1443 are loaded into the connection components 1494 through the opening portions, the connection columns 1444 are capable of extending out from the second frame 1443 to be engaged with the corresponding connection components 1494, such that the carrier 1400 can be stably attached to the base 1490.

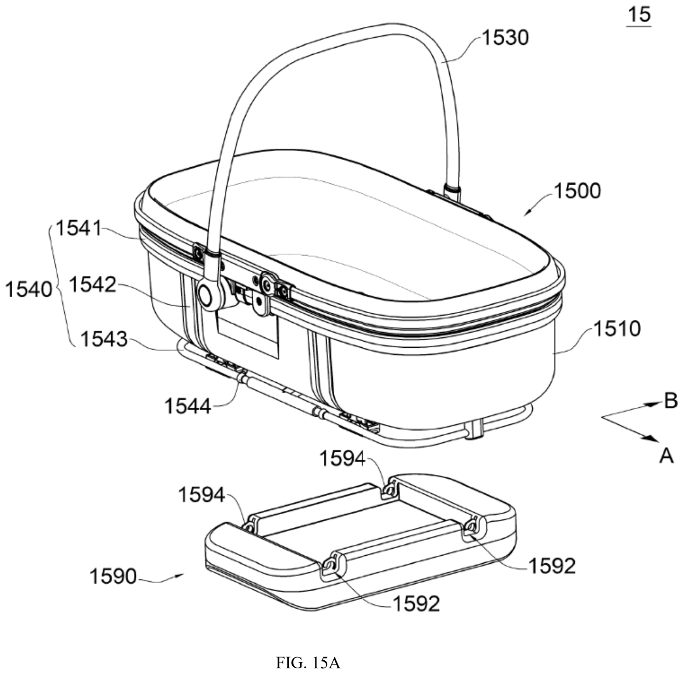

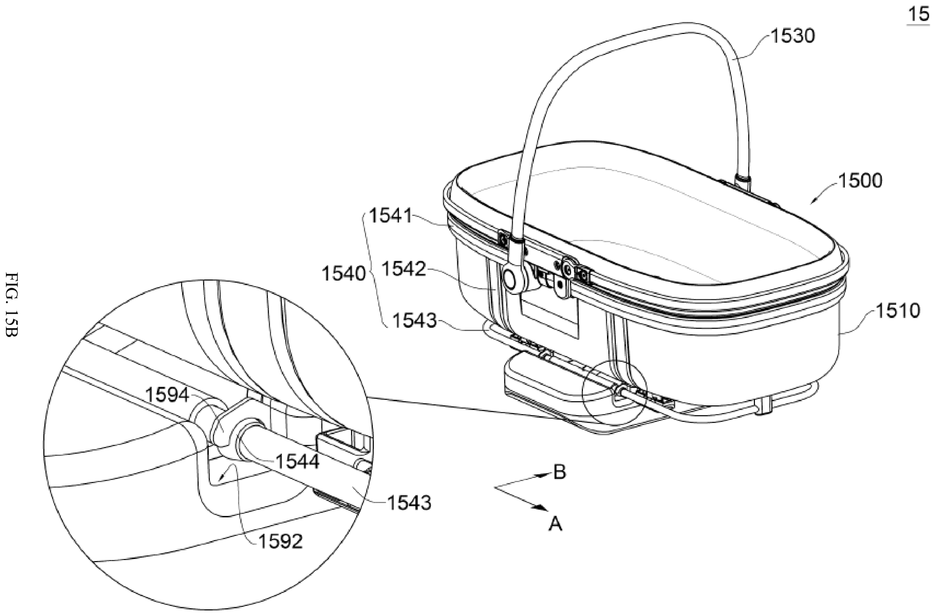

Please refer to FIG. 15A and FIG. 15B, which schematically show different views of the travel device 15 according to an exemplary embodiment of the present disclosure. The travel device 15 includes a carrier 1500 and a base 1590. The carrier 1500 may be constructed in a manner similar to the aforementioned embodiment, including a box body portion 1510, a lifting handle 1530 pivotably and detachably connected to opposite sides of the box body portion 1510, and a bracket assembly 1540 connected to the box body portion 1510. In this embodiment, the bracket assembly 1540 includes a first frame 1541, a second frame 1543 connected to the outer bottom portion of the box body portion 1510, and a connection frame 1542 connected between the first frame 1541 and the second frame 1543 and connected to the box body portion 1510. Similarly, the first frame 1541 and the connection frame 1542 of the bracket assembly 1540 have respective contours corresponding to the contour of the box body portion 1510, such that when they are connected to the box body portion 1510, they can support the box body portion 1510 in a relatively stable and firm manner. The second frame 1543 is connected to the outside of the box body portion 1510, so as to allow the carrier 1500 to be attached to the base 1590 through the second frame 1543.

In this embodiment, the base 1590 has a structure and a configuration similar to those of the base 1490. The base 1590 includes connection recesses 1592 configured to accommodate two long sides of the second frame 1543, and connection components 1594 exposed on inner surfaces of the connection recesses 1592. Similarly, the connection components 1594 may each be a hook or claw, etc., and the connection components 1594 each has a root portion and an opening portion, the root portions are fixed to the inner sides of the respective connection recesses 1592, and the opening portions allows the two long sides of the second frame 1543 to pass through and be loaded therein. In this embodiment, each long side of the second frame 1543 may include a pair of stop rings 1544, located at positions corresponding to the respective connection components 1594. Preferably, a size and a shape of the connection components 1594 and the same of their opening portions allow the second frame 1543 to be loaded therein and be movable in the longitudinal direction A, and when the stop rings 1544 are "stuck" by the connection components 1594 and are thereby engaged with the connection components 1594, the second frame 1543 stops moving and is fixed therein, such that the carrier 1500 can be stably attached to the base 1590. More specifically, when it is needed to be engaged, the two long sides of the second frame 1543 are loaded into the respective connection recesses 1592, moved along the direction B toward the root portions of the connection components 1594, and then moved along the direction A to drive the stop rings 1544 to move to abut against the connection components 1594 and be stuck and positioned. Through the stop rings 1544 and the connection components 1594, the carrier 1500 can be attached to the base 1590 in a relatively firm manner.

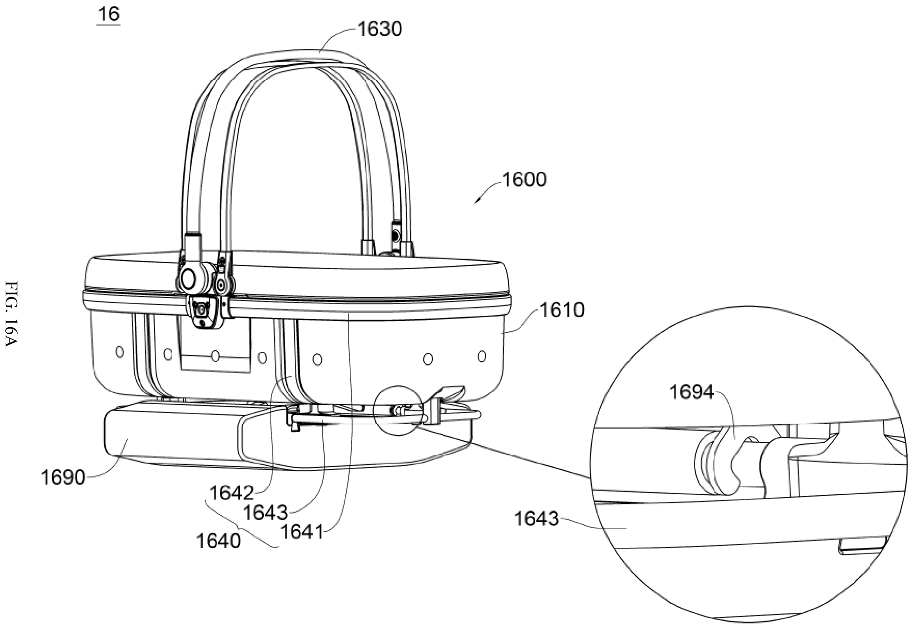

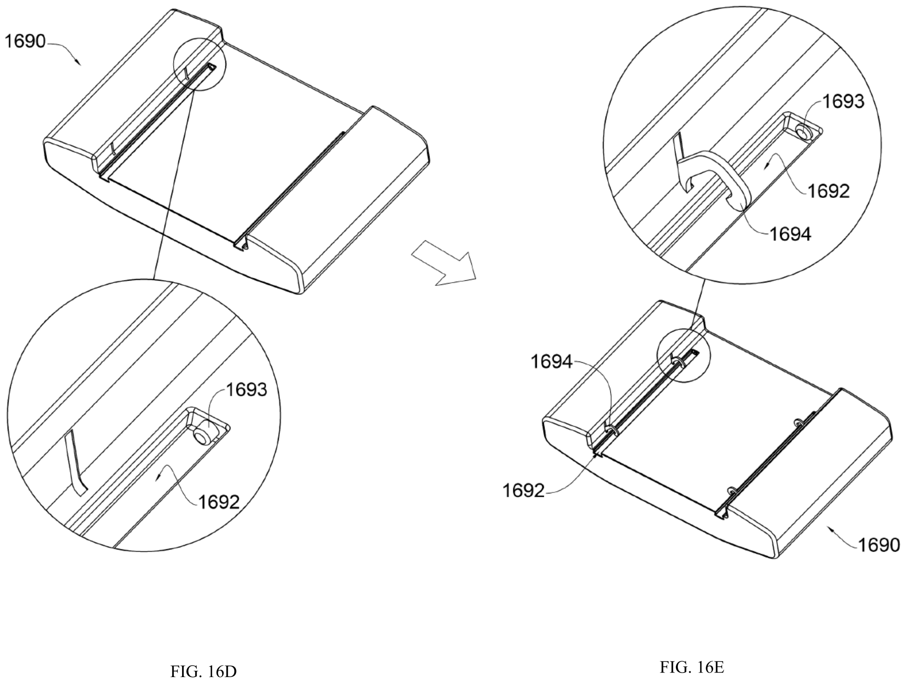

Please refer to FIG. 16A and FIG. 16E, which schematically show different views of the travel device 16 according to an exemplary embodiment of the present disclosure. The travel device 16 includes a carrier 1600 and a base 1690. The carrier 1600 may be constructed in a manner similar to the aforementioned embodiments, including a box body portion 1610, a lifting handle 1630 pivotably and detachably connected to opposite sides of the box body portion 1610, and a bracket assembly 1640 connected to the box body portion 1610. In this embodiment, the bracket assembly 1640 includes a first frame 1641, a second frame 1643 connected to the outer bottom portion of the box body portion 1610, and a connection frame 1642 connected between the first frame 1641 and the second frame 1643 and connected to the box body portion 1610. Similarly, the first frame 1641 and the connection frame 1642 of the bracket assembly 1640 have respective contours corresponding to the contour of the box body portion 1610, such that when they are connected to the box body portion 1610, they can support the box body portion 1610 in a relatively stable and firm manner. The second frame 1643 is connected to the outside of the box body portion 1610, so as to allow the carrier 1600 to be attached to the base 1690 through the second frame 1643.

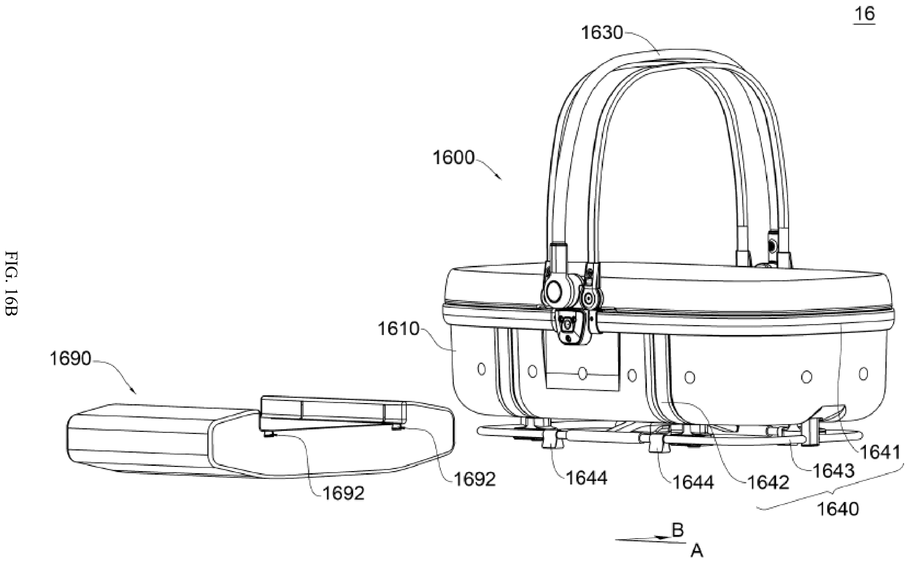

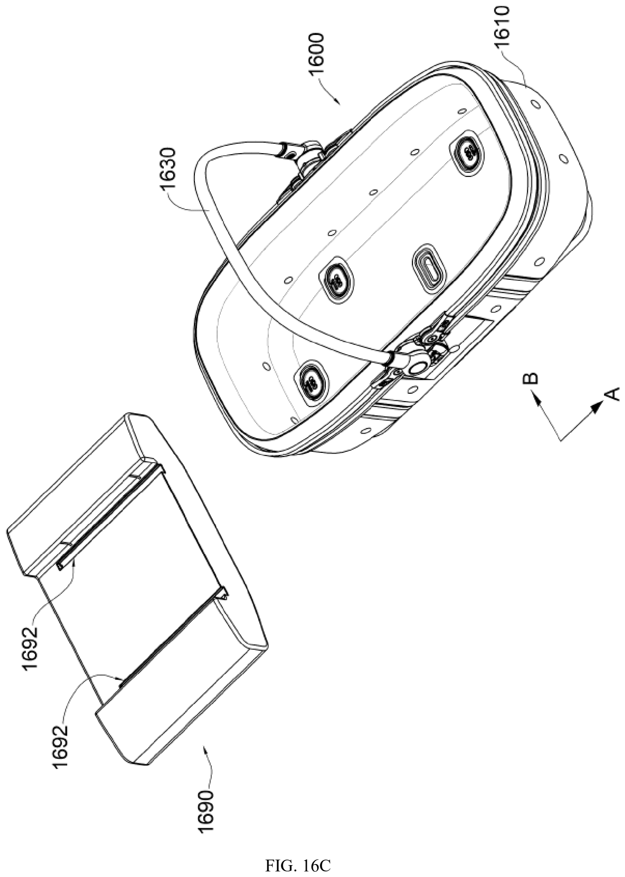

As shown in FIG. 16B and FIG. 16C, in this embodiment, the base 1690 includes two guide grooves 1692 extending in a direction parallel to the longitudinal direction A of the carrier 1600, and the guide grooves 1692 are configured to receive a part of the second frame 1643. On an inner surface of each of the guide grooves 1692, the base 1690 includes connection components 1694, which may be triggered to extend into and retract from the guide grooves 1692. The connection components 1694 may each be a hook or a claw. In this embodiment, each long side of the second frame 1643 may include a pair of guide members 1644, which are located outside the positions corresponding to the respective connection components 1694. Preferably, the guide members 1644 may each be a wedge-shaped block, and contours of the guide grooves 1692 may correspond to contours of the guide members 1644, such that the guide members 1644 are capable of being accommodated therein and move in a direction parallel to the longitudinal direction A of the carrier 1600.

Referring to FIG. 16B, FIG. 16D and FIG. 16E, when the carrier 1600 needs to be attached to the base 1690, the carrier 1600 can be pushed toward the base 1690 along its longitudinal direction A. When the carrier 1600 moves in this direction, the long sides of the second frame 1643 and the guide members 1644 are guided and moved in the guide grooves 1692. Initially, the connection components 1694 may be retracted from the guide grooves 1692, such that the long sides of the second frame 1643 and the guide members 1644 can smoothly move in the guide grooves 1692. When the guide members 1644 move to touch the activation parts 1693 arranged at ends of the guide grooves 1692, the guide members 1644 can trigger the connection components 1694 to extend into the guide grooves 1692 (as shown in FIG. 16E). In this way, the long sides of the second frame 1643 may be "stuck" in place by the connection components 1694, such that the carrier 1600 is stably attached to the base 1690.

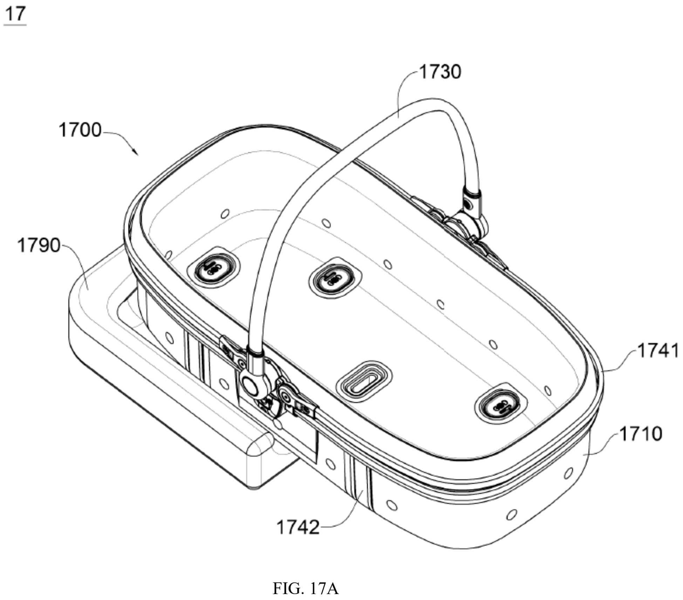

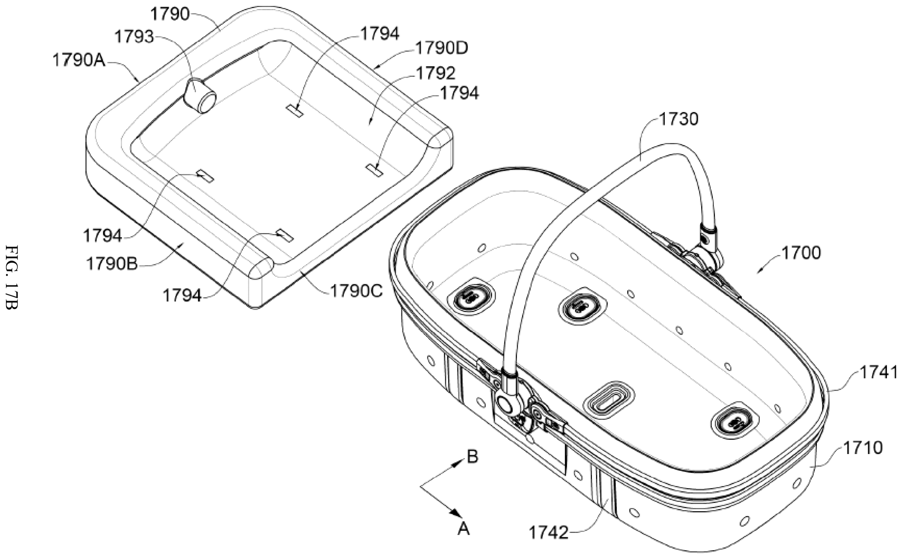

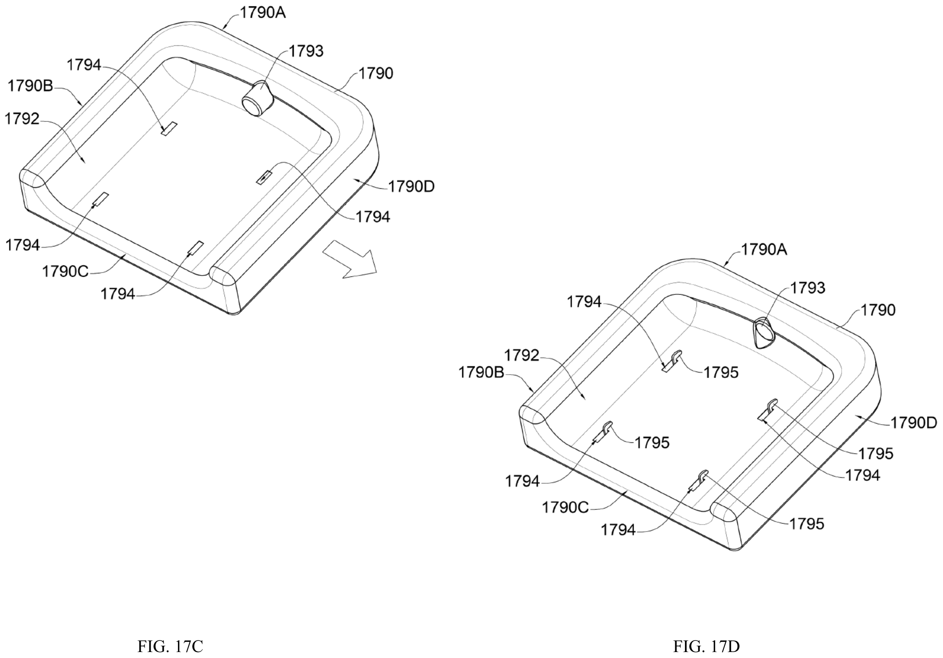

Please refer to FIG. 17A to FIG. 17E, which schematically show different views of the travel device 17 according to an exemplary embodiment of the present disclosure. As shown in FIG. 17A and FIG. 17B, the travel device 13 includes a carrier 1700 and a base 1790. The carrier 1700 may be constructed in a manner similar to the aforementioned embodiments, including a box body portion 1710 and a lifting handle 1730 pivotably and detachably connected to opposite sides of the box body portion 1710.

As shown in FIG. 17B to FIG. 17D, the base 1790 in this embodiment can be designed as having a drawer-type structure. More specifically, the base 1790 is mainly formed by a horizontal side wall 1790A and two opposite longitudinal side walls 1790B and 1790D, defining an internal space 1792 for accommodating the carrier 1700, and leaving a side opening 1790C for the carrier 1700 to be loaded therein. At the inner bottom of the base 1790 (i.e., a bottom facing the carrier 1700), the base 1790 is provided with at least one (preferably four in this embodiment) connection component 1795, and the connection component 1795 is capable of extending and retracting through respective openings 1794 formed on the bottom of the base 1790. Preferably, the extension and retraction of the connection component 1795 may be triggered by an activation part 1793 configured on the inner side of the horizontal side wall 1790A.

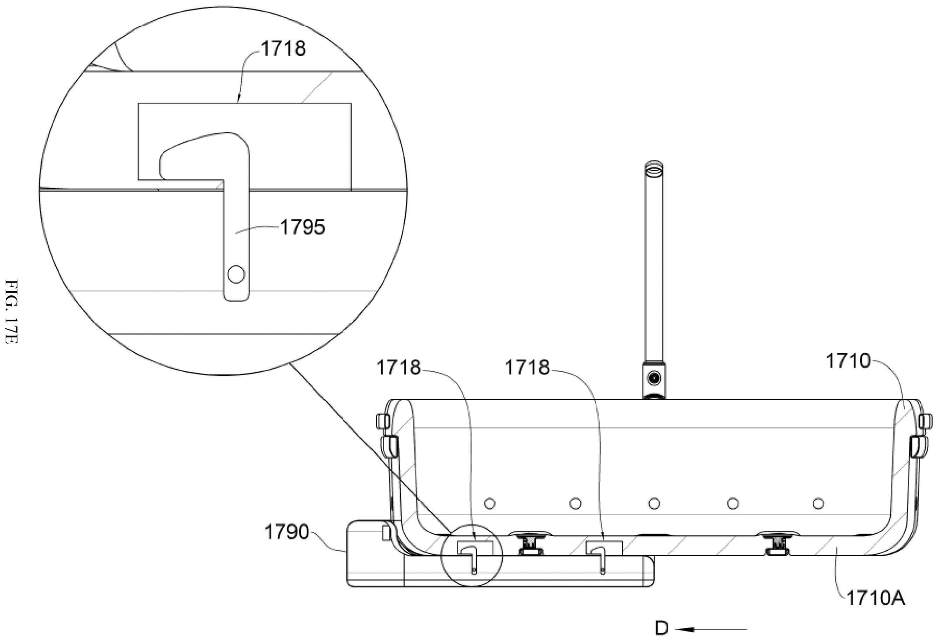

Referring to FIG. 17E, when the carrier 1700 needs to be attached to the base 1790, the carrier 1700 can be pushed toward the base 1790 in its longitudinal direction. That is, the carrier 1700 can be pushed toward the base 1790 in direction D. The carrier 1700 is movable in this direction in the internal space 1792 defined by the horizontal side wall 1790A, the longitudinal side wall 1790B, and the longitudinal side wall 1790D. The connection component 1795 can be initially retracted into the bottom of the base 1790 such that the carrier 1700 can move smoothly in the internal space 1792. When the carrier 1700 is moved into place, such that the activation part 1793 disposed on an inner side of the horizontal side wall 1790 is contacted and pressed by the box body portion 1710 of the carrier 1700, the connection components 1795 can be triggered to extend from the bottom of the base 1790 through respective openings 1794 (as shown in FIG. 17D). The connection components 1795 extending from the openings 1794 can be engaged into place with the connection recesses 1718 formed on the outer bottom portion 1710A of the box body portion 1710, such that the carrier 1700 can be stably attached to the base 1790. In this embodiment, the connection recess 1718 formed on the outer bottom portion 1710A of the base 1790 can be covered by an additional reinforcement plate (not shown) made of metal or metal material, so as to prevent the connection recess 1718 from being damaged due to repeated engagement and disengagement of the connection component 1795. In this way, the service life of the base 1790 can be extended.

In the present disclosure, the attachment of the carrier to the base or the detachment of the carrier from the base is achieved by triggering the attachment mechanism, which is, for example but not limited to, configured on the carrier. The attachment mechanism according to the present disclosure may constructed as, for example, but not limited to, the connection rod and the connection recess with the connection component, the connection column and the connection component, the stop ring on the bracket assembly and the connection recess with the connection component, the guide member and the guide groove with the connection component, and the connection recess and the connection component. Alternatively, the attachment mechanism may also adopt a configuration other than the above-mentioned structural forms.

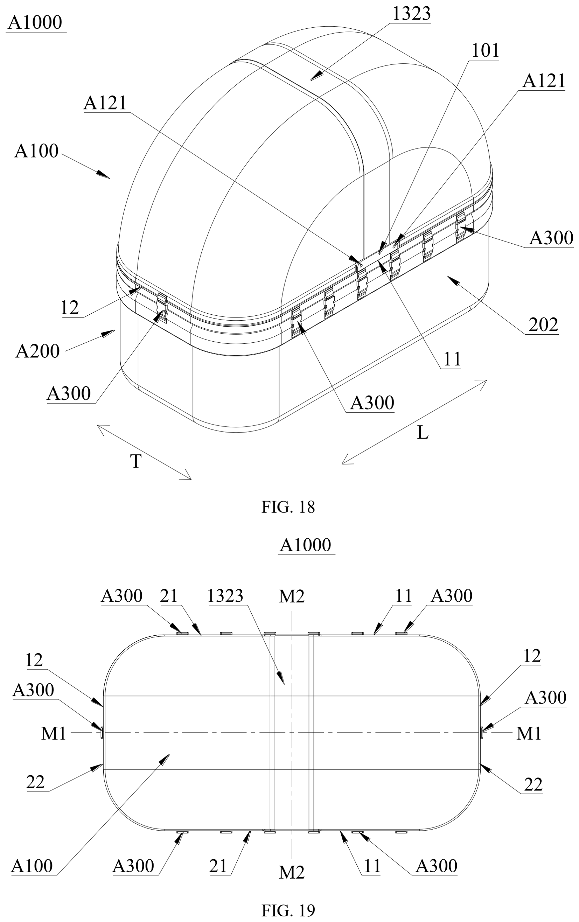

For ease of understanding, an arrow L is used to represent the longitudinal direction and an arrow T is used to represent the transverse direction in FIG. 18 to FIG. 62. The directional terms "longitudinal" and "transverse" are only used to make the description of the embodiments of the present disclosure clearer and are not used to cause improper limits on the scope of protection of the present disclosure.

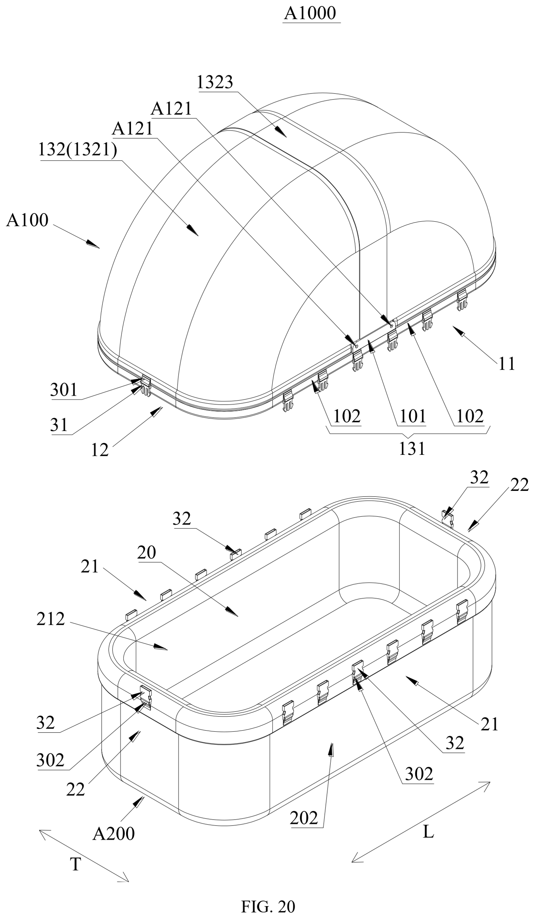

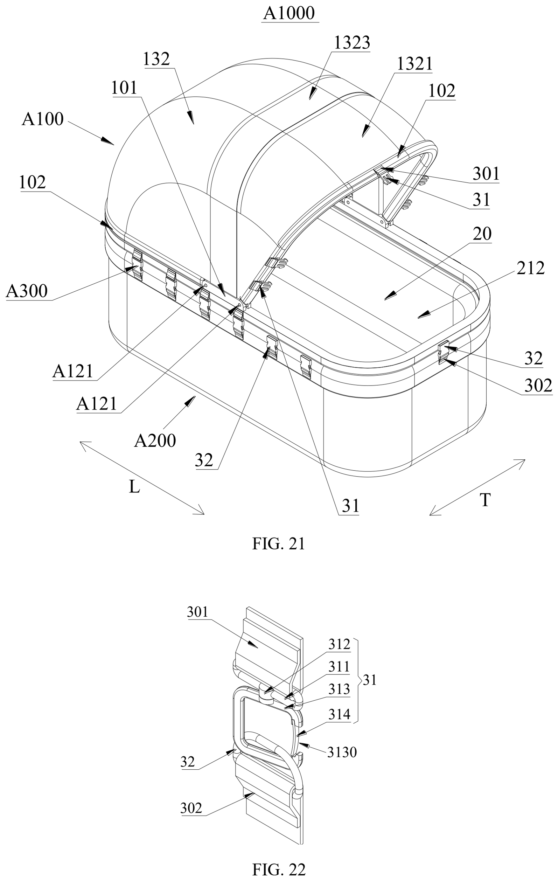

FIG. 18 schematically shows a stereoscopic view of a carrier A1000 provided in some embodiments of the present disclosure. The carrier A1000 may be, but is not limited to, a pet carrier. As shown in FIG. 18, the carrier A1000 includes a canopy assembly (also referred to as a canopy portion) A100 and an accommodation body A200. The canopy assembly A100 is connected to the accommodation body A200, and the canopy assembly A100 is in a fully expanded state. FIG. 19 shows a top view of the carrier A1000. FIG. 20 shows a stereoscopic view of the canopy assembly A100 and the accommodation body A200 of the carrier A1000 being completely separated. FIG. 21 shows a stereoscopic view of the canopy assembly A100 and the accommodation body A200 of the carrier A1000 being connected, but the canopy assembly A100 is in an incompletely expanded state to partially open the top opening 20 of the accommodation body A200.

Referring to FIG. 18 to FIG. 21, when the canopy assembly A100 is mounted to the accommodation body A200 and the canopy assembly A100 is in a fully expanded state (FIG. 18), it can completely cover the top opening 20 of the accommodation body A200. The canopy assembly A100 can also be partially folded to partially open the top opening 20 of the accommodation body A200 while it is connected to the accommodation body A200 (FIG. 21). In addition, the canopy assembly A100 may be removed from the accommodation body A200 as needed (FIG. 20).

Referring to FIG. 20 and FIG. 21, when the canopy assembly A100 is in a fully expanded state, the canopy assembly A100 has a frame 131 at the bottom thereof and a canopy 132 supported by the frame 131. Referring to FIG. 19, the frame 131 is, for example, generally rectangular, and four sides of the frame 131 correspond to four side edges of the canopy assembly A100, the four side edges are two opposite first side edges 11 and two opposite second side edges 12, and the two second side edges 12 are located between the two first side edges 11. The two first side edges 11 extend longitudinally, and the two second side edges 12 extend transversely. In some embodiments, the length of the first side edge 11 extending in the longitudinal direction is greater than the length of the second side edge 12 extending in the transverse direction. The first side edge 11 may be referred to as a long side, and the second side edge 12 may be referred to as a short side. The canopy 132 may include a canopy cloth 1321 and an arched bracket (not shown in the figure) configured to support the canopy cloth 1321 into an arched shape. The arched bracket may have a U-shape, and the two ends of the arched bracket correspond to the two first side edges 11. The canopy cloth 1321 may have a ventilation port. The ventilation port may be covered by a mesh structure (e.g., a mesh fabric).

In some embodiments, the frame 131 may include two U-shaped frames 102 and two connection members 101, and the two connection members 101 are located in the middle portions of the two first side edges 11 and in the middle between the two U-shaped frames 102. Both ends of each of the connection members 101 are provided with pivot shafts A 121 respectively. The two ends of each of the U-shaped frames 102 are respectively pivotally connected to the two connection members 101 through corresponding pivot shafts A121. Thus, any one of the U-shaped frames102 is capable of pivoting upward around the corresponding pivot shaft A121, and the U-shaped frame 102 pivoting upward drives the canopy 132 to partially fold, thereby opening the top opening 20 of the accommodation body A200. Of course, both of the U-shaped frames 102 can also be pivoted upward around the corresponding pivot shafts A121 to open the top opening 20.

In some embodiments, the canopy 132 has a middle portion 1323 connected between the two connection members 101, and the middle portion 1323 is supported by an arched bracket (not shown in the figure) located between the two connection members 101 to form an intermediate support portion.

Referring to FIG. 20 and FIG. 21, the accommodation body A200 is, for example, a box-type structure, which defines an accommodation space 212 configured to accommodate a pet, and the accommodation space 212 has a top opening 20, through which the pet can enter the accommodation space 212. In some embodiments, the accommodation body A200 may include a box body (also referred to as a box body portion, not shown in the figure) made of foam, a bracket device (not shown in the figure) sleeved on the outside of the box body, and a seat cloth 202. The bracket device is configured to enhance the structural strength of the box body on the outside of the box body, and the bracket device may be a frame-type structure made of metal. The seat cloth 202 is, for example, wrapped around the outside of the box body and the bracket device, such that the accommodation body A200 has a neat appearance. Of course, the accommodation body A200 may also have other embodiments and is not limited to the aforementioned examples. For example, in some embodiments, the box body may be made of plastic, in which case the bracket device may be omitted, and the seat cloth 202 may be directly wrapped around the box body. Or in some embodiments, the box body may be made of plastic, in which case the bracket device and the seat cloth 202 may be omitted.

Referring to FIG. 20, the shape of the accommodation body A200 is approximately a cuboid, which includes two opposite first side surfaces 21 and two opposite second side surfaces 22, and the two second side surfaces 22 are located between the two first side surfaces 21. In this embodiment, the first side surfaces 21 extend longitudinally, and the second side surfaces 22 extend transversely. In some embodiments, the length of the first side surface 21 extending in the longitudinal direction is greater than the length of the second side surface 22 extending in the transverse direction. The first side surface 21 may be referred to as a long side, and the second side surface 22 may be referred to as a short side. Of course, the structure of the accommodation body A200 is not limited to a cuboid.

Referring to FIG. 18 and FIG. 19, when the canopy assembly A100 is in a fully expanded state, a bottom of the canopy assembly A100 can be covered on a top of the accommodation body A200, the first side edges 11 of the canopy assembly A100 correspond to the first side surfaces 21 of the accommodation body A200, and the second side edges 12 of the canopy assembly A100 correspond to the second side surfaces 22 of the accommodation body A200.

Referring to FIG. 18 and FIG. 20, the canopy assembly A100 and the accommodation body A200 are detachably connected through a plurality of connection assemblies A300. The connection assembly A300 connected between the canopy assembly A100 and the accommodation body A200 may also be referred to as a connection enhancement member. Some of the connection assemblies A300 are connected between the two first side edges 11 of the canopy assembly A100 and the two first side surfaces 21 of the accommodation body A200, and some of the connection assemblies A300 are connected between the two second side edges 12 of the canopy assembly A100 and the two second side surfaces 22 of the accommodation body A200. The plurality of connection assemblies A300 form a plurality of fixing points at the joints between the canopy assembly A100 and the accommodation body A200, ensuring that the canopy assembly A100 is firmly connected to the accommodation body A200. In some embodiments, the plurality of connection assemblies A300 may be symmetrically arranged with respect to the longitudinal center plane M1-M1 of the accommodation body A200, and may be symmetrically arranged with respect to the transverse center plane M2-M2 of the accommodation body A200.

Referring to FIG. 19 and FIG. 20, in some embodiments, the number of the connection assemblies A300 located between the first side edge 11 and the first side surface 21 is greater than the number of the connection assemblies A300 located between the second side edge 12 and the second side surface 22. Among the plurality of connection assemblies A300 located between the first side edge 11 and the first side surface 21, the connection assemblies A300 located in the center may be close to the respective pivot shafts A121, and the connection assemblies A300 located at both ends in the longitudinal direction are far away from the respective pivot shafts A121. In some embodiments, the position of each of the connection assemblies A300 located in the center correspond to the position of the adjacent pivot shaft A121.

Referring to FIG. 20, an exemplary implementation of the connection assembly A300 is shown in this embodiment. The connection assembly A300 includes a first connection member 31 connected to the canopy assembly A100 and a second connection member 32 connected to the accommodation body A200 (and thus directly or indirectly connected to the box body of the accommodation body A200), and the first connection member 31 is detachably connected to the second connection member 32. For example, one of the first connection member 31 and the second connection member 32 is a male fastener, and the other is a female fastener, and the male fastener is detachably inserted into the female fastener. Specifically in this embodiment, the first connection member 31 adopts a male fastener, and the first connection member 31 is connected to the canopy cloth 1321 through, for example, a webbing 301. Accordingly, the second connection member 32 adopts a female fastener, and the second connection member 32 is connected to the seat cloth 202 through, for example, a webbing 302.

Of course, the implementation of the connection assembly A300 is not limited to the aforementioned examples, and it can adopt any suitable connection structures. FIG. 22 to FIG. 29 show some alternative implementations of the connection assembly A300.

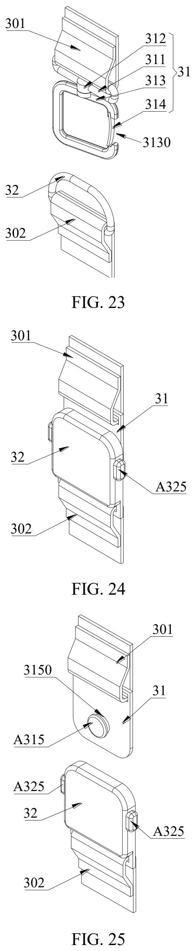

FIG. 22 and FIG. 23 show a stereoscopic view of an alternative manner of the connection assembly A300, where the first connection member 31 and the second connection member 32 are connected to each other in FIG. 22, and the first connection member 31 and the second connection member 32 are separated from each other in FIG. 23. One of the first connection member 31 and the second connection member 32 may be a connection fastener, and the other thereof may be a fastener ring, and the connection fastener can be hooked with the fastener ring. More specifically, the first connection member 31 is, for example, a connection fastener, and the second connection member 32 is a fastener ring. The connection fastener includes a connection ring 311, a pivot shaft 312, a hook body 313, and a locking arm 314. The connection ring 311 is connected to the webbing 301, and the webbing 301 can be connected to the canopy cloth 1321. The hook body 313 is pivotally connected to the connection ring 311 through the pivot shaft 312, and the hook body 313 has a mounting opening 3130. The locking arm 314 is connected to the hook body 313, and is capable of open or close the mounting opening 3130. The fastener ring is connected to the webbing 302, and the webbing 302 may be connected to the seat cloth 202. The fastener ring is capable of entering the hook body 313 through the mounting opening 3130 to be hooked with the hook body 313.

FIG. 24 and FIG. 25 show a stereoscopic view of another alternative manner of the connection assembly A300, where the first connection member 31 and the second connection member 32 are connected to each other in FIG. 24, and the first connection member 31 and the second connection member 32 are separated from each other in FIG. 25. One of the first connection member 31 and the second connection member 32 is a male fastener, and the other thereof is a female fastener, and the male fastener and the female fastener may be detachably fastened together. At least one of the first connection member 31 and the second connection member 32 is provided with a magnetic device, and when the two are fastened together, the two are also attracted to each other through the magnetic device. More specifically, the first connection member 31 is, for example, a male fastener, and the male fastener includes a convex structure A315, and the convex structure A315 is provided with a groove 3150. The second connection member 32 is, for example, a female fastener, and the female fastener includes an engaging cavity (not shown in the figure), and the engaging cavity is configured to combine with the convex structure A315 of the male fastener. The female fastener additionally includes a locking member (not shown in the figure), and the locking member can be engaged with the groove 3150 in the engaging cavity. The female fastener may further be provided with an unlocking member A325, and the unlocking member A325 is operably connected to the locking member. When the unlocking member A325 is pressed, the unlocking member A325 drives the locking member to be detached from the groove 3150.

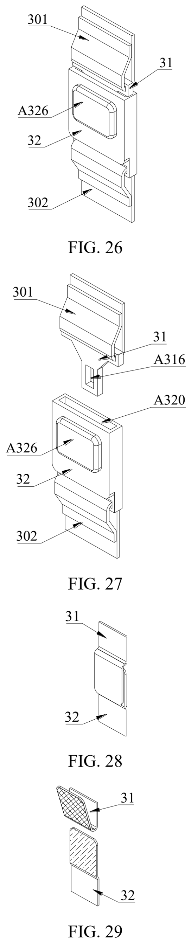

FIG. 26 and FIG. 27 show a stereoscopic view of yet another alternative manner of the connection assembly A300, where the first connection member 31 and the second connection member 32 are connected to each other in FIG. 26, and the first connection member 31 and the second connection member 32 are separated from each other in FIG. 27. One of the first connection member 31 and the second connection member 32 may a male fastener, and the other thereof is a female fastener, and the male fastener may be inserted into the female fastener. More specifically, the first connection member 31 is, for example, a male fastener, and the male fastener is provided with a locking hole A316. The second connection member 32 is, for example, a female fastener, and the female fastener includes an engaging cavity A320, and the engaging cavity A320 is provided with a locking member (not shown in the figure) therein. When the male fastener is connected to the female fastener, the locking hole A316 is located in the engaging cavity A320 and is combined with the locking member. The female fastener additionally includes an unlocking member A326, and the unlocking member A326 is operably connected to the locking member. When the unlocking member A326 is pressed, the locking member is driven to be detached from the locking hole A316.

FIG. 28 and FIG. 29 show a stereoscopic view of another alternative manner of the connection assembly A300, where the first connection member 31 and the second connection member 32 are connected to each other in FIG. 28, and the first connection member 31 and the second connection member 32 are separated from each other in FIG. 29. The first connection member 31 and the second connection member 32 may be hook and loop fasteners that cooperate with each other. The first connection member 31 may be directly connected to the canopy cloth 1321, and the second connection member 32 may be directly connected to the seat cloth 202.

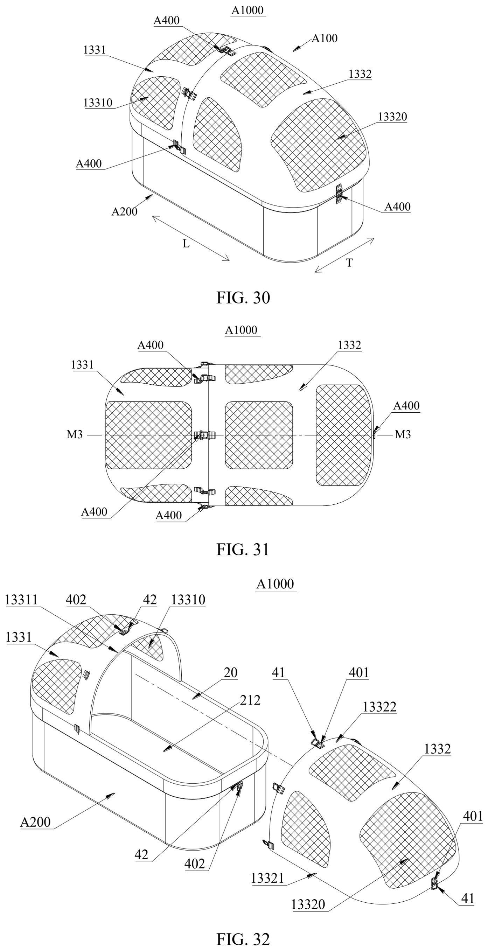

FIG. 30 schematically shows a stereoscopic view of a carrier A1000 provided in some embodiments of the present disclosure. The carrier A1000 may be, but is not limited to, a pet carrier. As shown in FIG. 30, the carrier A1000 includes a canopy assembly A100 and an accommodation body A200. FIG. 31 shows a top view of the carrier A1000. FIG. 32 shows a stereoscopic view of a movable canopy 1332 and a fixed canopy 1331 of the canopy assembly A100 being separated.

In this embodiment, the canopy assembly A100 includes a fixed canopy 1331 and a movable canopy 1332. Referring to FIG. 32, the fixed canopy 1331 is non-detachably connected to the accommodation body A200, and the movable canopy 1332 is detachably connected to the accommodation body A200 and the fixed canopy 1331. In the absence of conflict, the structure of the accommodation body A200 in this embodiment can refer to the structure of the accommodation body A200 described above. The accommodation body A200 includes an accommodation space 212 and a top opening 20, and the fixed canopy 1331 covers a part of the region of the top opening 20. The fixed canopy 1331 has an arched first edge 13311, and the movable canopy 1332 has an arched second edge 13322, and the first edge 13311 and the second edge 13322 are opposite to each other. The movable canopy 1332 further has a bottom edge 13321. The fixed canopy 1331 may be provided with a ventilation port 13310, and the movable canopy may be provided with a ventilation port 13320, and the ventilation port 13310 and the ventilation port 13320 each may be covered by a mesh structure (such as a mesh fabric).

Referring to FIG. 30, when the canopy assembly A100 is in a normal use state, the movable canopy 1332 is docked with the fixed canopy 1331 so as to completely cover the top opening 20 of the accommodation body A200. More specifically, the first edge 13311 of the fixed canopy 1331 and the second edge 13322 of the movable canopy 1332 may be connected through one or more connection assemblies A400. In addition, the bottom edge 13321 of the movable canopy 1332 may be detachably connected to the accommodation body A200 through one or more connection assemblies A400. Referring to FIG. 32, the movable canopy 1332 may be separated from the accommodation body A200 and the fixed canopy 1331 as needed.

Referring to FIG. 30 and FIG. 31, in some embodiments, a connection assembly A400 may be provided between the top of the first edge 13311 and the top of the second edge 13322. A connection assembly A400 may be provided between a bottom of the first edge 13311 and a bottom of the second edge 13322. In addition, at least one connection assembly A400 may be provided between a waist of the first edge 13311 and a waist of the second edge 13322. In some embodiments, a plurality of connection assemblies A400 provided between the first edge 13311 and the second edge 13322 are arranged at even intervals.

In addition, although in this embodiment, the number of connection assemblies A400 between the bottom edge 13321 of the movable canopy 1332 and the accommodation body 100 may be set as needed.

Referring to FIG. 32, in this embodiment, each of the connection assemblies A400 includes a first connection member 41 and a second connection member 42, and the first connection member 41 is detachably connected to the second connection member 42. The first connection member 41 may be connected to the movable canopy 1332 through a webbing 401, and the second connection member 42 may be connected to the fixed canopy 1331 or the accommodation body A200 through a webbing 402. The specific implementation of the first connection member 41 and the second connection member 42 may refer to the specific implementation of the first connection member 31 and the second connection member 32 exemplified above, which will not be repeated here.

In addition, the connection assembly A400 connected between the canopy assembly 1332 and the accommodation body A200 may also be referred to as a connection enhancement member. One end of the first connection member 41 that connected to the movable canopy 1332 can be called the first end portion of the connection enhancement member, and another end of the second connection member 42 that connected to the accommodation body A200 can be called the second end portion of the connection enhancement member. The connection and separation of the first connection member 41 and the second connection member 42 correspond to the connection state and the separation state of the connection enhancement member.

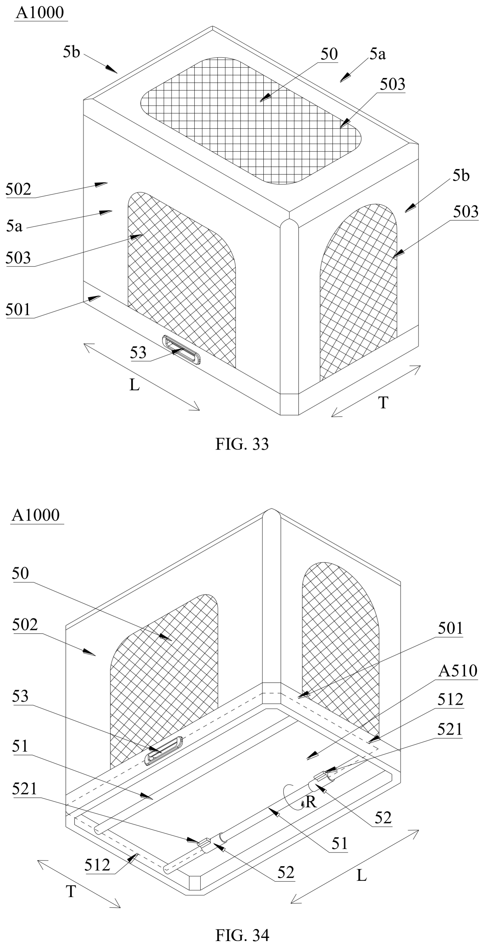

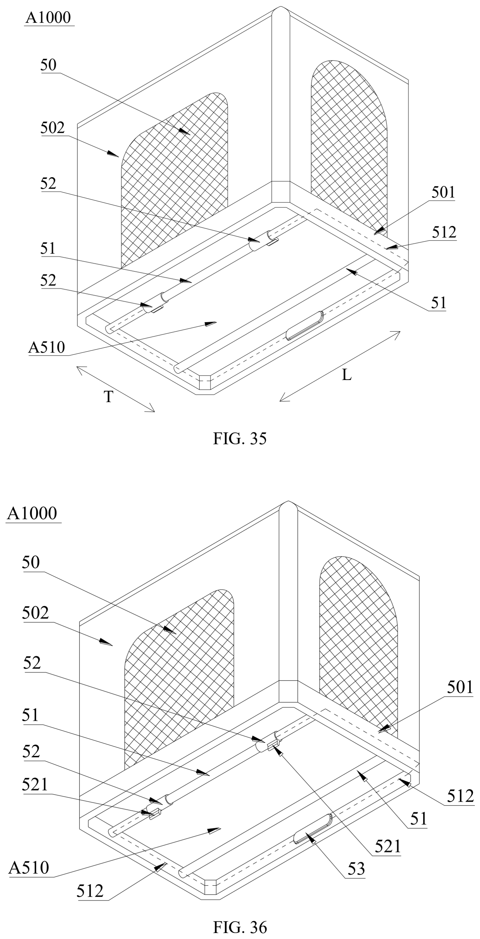

FIG. 33 to FIG. 36 show stereoscopic views of the carrier A1000 provided according to some embodiments of the present disclosure from different perspectives, where the engaging member 52 in FIG. 34 and FIG. 35 is in the storage position, and the engaging member 52 in FIG. 36 is in the use position.

Referring to FIG. 33, the shape of the carrier A1000 is similar to a cuboid, and of course, the shape of the carrier A1000 is not limited to the cuboid. The carrier A1000 includes a bottom support structure 501 and a storage portion 502 located above the bottom support structure 501. The storage portion 502 includes a top surface and a plurality of side surfaces, and the plurality of side surfaces include, for example, two first side surfaces 5a and two second side surfaces 5b. The two second side surfaces 5b are located between the two first side surfaces 5a. Each of the first side surfaces 5a extends longitudinally, and each of the second side surfaces 5b extends transversely. In some embodiments, the length of the first side surface 5a extending in the longitudinal direction is greater than the length of the second side surface 5b extending in the transverse direction. The storage portion 502 and the bottom support structure 501 define an accommodation space 50 configured to, for example, place a pet. The bottom support structure 501 may be made of, for example, a hard material, so as to support the storage portion 502. The storage portion 502 may include a fabric sheet and other materials that surround and define the accommodation space 50. A ventilation port 503 may be provided on the top surface and/or the side surfaces of the storage portion 502, and the ventilation port 503 may be covered by a mesh structure (e.g., a mesh fabric).

Referring to FIG. 34 and FIG. 35, a recess portion A510 is formed on the bottom surface of the bottom support structure 501, and two rods 51 are mounted in the recess portion A510, and the two rods 51 are parallel to each other and extend in the longitudinal direction. In some embodiments, the two rods 51 are symmetrically arranged, for example, relative to the longitudinal center plane (not shown in the figure) of the carrier A1000. Two engaging members 52 are mounted on one of the rods 51, and each of the engaging members 52 has an engaging portion 521 protruding outward. For example, the carrier A1000 may be placed on an engaging seat (not shown in the figure) of the stroller, and connected to a locking member (such as a hook, not shown in the figure) of the engaging seat through each of the engaging portions 521. In some embodiments, the engaging portion 521 may be provided with a locking hole configured to cooperate with the hook.

Each of the engaging members 52 is rotatably arranged on the rod 51, such that the engaging member 52 is capable of rotating to a storage position or a use position. Referring to FIG. 36, when the engaging member 52 is in the use position, the engaging portion 521 of the engaging member 52 is rotated to a downwardly extending position so as to be connected to the locking member of the engaging seat. In some embodiments, when the engaging member 52 is in the use position, the engaging portion 521 protrudes, for example, relative to a bottom surface of the carrier A1000. Referring to FIG. 34 and FIG. 35, when the engaging member 52 is in the storage position, the engaging portion 521 is rotated for example to a horizontal position and do not extend downward, such that the engaging portion 521 can be prevented from being impacted by objects under the carrier A1000 when not in use.

The engaging members 52 are normally kept in the storage position. The carrier A1000 may also be provided with an operating member 53, and the operating member 53 may be operably connected to each of the engaging members 52. The operating member 53 is, for example, mounted on the bottom support structure 501. When the operating member 53 is subjected to a driving force, the operating member 53 drives the engaging members 52 to rotate along the direction R to the use position. In some embodiments not shown, the operating member 53 is connected to each of the engaging members 52 through a linkage such as a wire rope 512. A reset member (such as a torsion spring) may be further provided between the engaging members 52 and the rod 51, and the reset member is configured to drive the engaging members 51 to rotate toward the storage position to keep the engaging members 51 in the storage position.

It should be noted that, in other embodiments, the number of the rods 51 is not limited to the two mentioned above, but may be set to one or more than two as needed. In addition, the extension direction of each of the rods 51 is not limited to the extension in the longitudinal direction, and in other embodiments, each of the rods 51 may, for example, extend in the transverse direction. In addition, the number of the engaging members 52 on each of the rods 51 is not limited to the two mentioned above, and the number of the engaging members 52 may be set to one or more than two as needed.

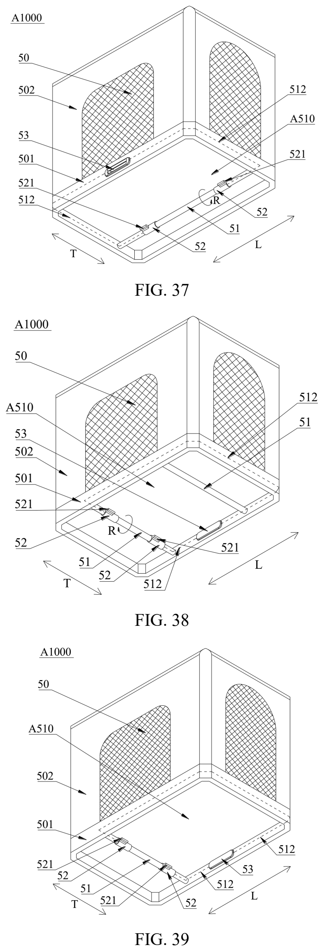

For example, in the variant embodiment shown in FIG. 37, one rod 51 extending in the longitudinal direction is provided in the recess portion A510, and the rod 51 is located on one side of the longitudinal center plane (not shown in the figure) of the carrier A1000. The rod 51 is provided with two engaging members 52, and the operating member 53 is operably connected to the two engaging members 52.

In the variant embodiment shown in FIG. 38, two rods 51 extending in the transverse direction are provided in the recess portion A510, and the two rods 51 are symmetrically arranged relative to the transverse center plane (not shown in the figure) of the carrier A1000. One of the rods 51 is provided with two engaging members 52, and the operating member 53 is operably connected to the two engaging members 52.

In the variant embodiment shown in FIG. 39, one rod 51 extending in the transverse direction is provided in the recess portion A510, and the rod 51 is located on one side of the transverse center plane (not shown in the figure) of the carrier A1000. The rod 51 is provided with two engaging members 52, and the operating member 53 is operably connected to the two engaging members 52.

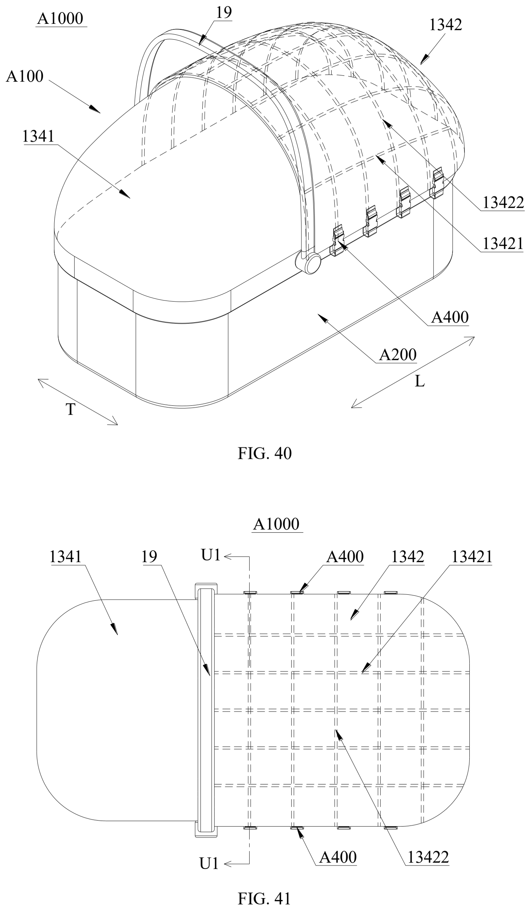

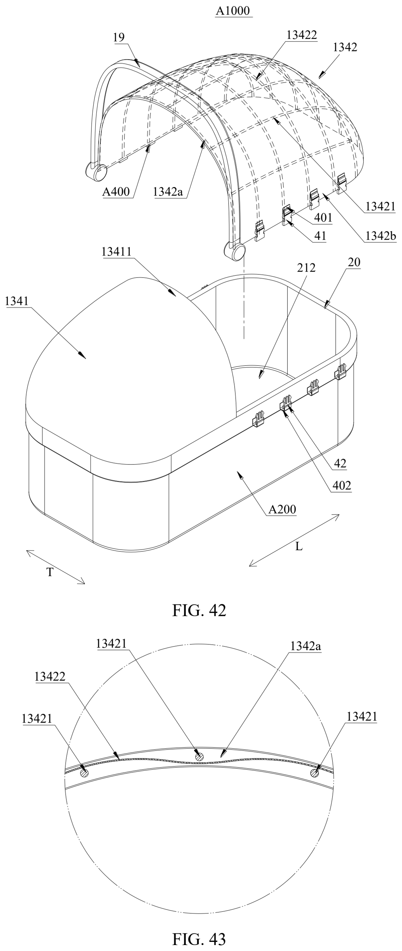

FIG. 40 schematically shows a stereoscopic view of a carrier A1000 provided in some embodiments of the present disclosure. The carrier A1000 may be, but is not limited to, a pet carrier. As shown in FIG. 40, the carrier A1000 includes a canopy assembly A100 and a accommodation body A200. FIG. 41 shows a top view of the carrier A1000. FIG. 42 shows a stereoscopic view of a movable canopy 1342 and a fixed canopy 1341 of the canopy assembly A100 being separated. FIG. 43 shows a partial sectional view taken along line U1-U1 of the movable canopy 1342 of FIG. 41.

The carrier A1000 of this embodiment is a variation of the carrier A1000 provided in FIG. 30 to FIG. 32. In the absence of conflict, the structure of the carrier A1000 of this embodiment can refer to the structure of the carrier A1000 shown in FIG. 30 to FIG. 32.

As shown in FIG. 40 and FIG. 42, in this embodiment, the canopy assembly A100 includes a fixed canopy 1331 and a movable canopy 1332. Referring to FIG. 42, the fixed canopy 1341 is non-detachably connected to the accommodation body A200. The accommodation body A200 includes an accommodation space 212 and a top opening 20, and the fixed canopy 1331 covers a part of the region of the top opening 20. The canopy cloth of the fixed canopy1331 may or may not be provided with a ventilation port. The fixed canopy 1341 has an arched first edge 13411, and the movable canopy 1342 has an arched second edge 1342a, and the first edge 13411 and the second edge 1342a are opposite to each other. The movable canopy 1332 further has a bottom edge 1342b.

Referring to FIG. 40 and FIG. 41, when the canopy assembly A100 is in a normal use state, the movable canopy 1342 is docked with the fixed canopy 1341 so as to completely cover the top opening 20 of the accommodation body A200. More specifically, the bottom edge 13421 of the movable canopy 1342 may be detachably connected to the accommodation body A200 through one or more connection assemblies A400. In some embodiments, the first edge 13411 of the fixed canopy 1341 and the second edge 13422 of the movable canopy 1342 may also be connected through one or more connection assemblies A400. Referring to FIG. 42, the movable canopy 1342 can be separated from the accommodation body A200 and the fixed canopy 1341 as needed, and a lifting handle 19 may be installed on the movable canopy 1342.

In this embodiment, an exemplary implementation of the movable canopy 1342 is shown, the movable canopy 1342 includes a grid-type frame, and the movable canopy 1342 covers the top opening 20 of the accommodation body A200 through the grid-type frame. The grid-type frame can be made of, for example, metal strips, plastic strips, or strips of other materials. In some embodiments, the movable canopy 1342 may further include a fabric layer covering the grid-type frame, and the fabric layer may be a mesh fabric layer.

Referring to FIG. 42 and FIG. 43 in combination, an exemplary implementation of the grid-type frame is shown. The grid-type frame includes, for example, a plurality of support strips 13421 spaced apart from each other in the transverse direction and a plurality of support strips 13422 spaced apart from each other in the longitudinal direction. The support strips 13421 and the support strips 13422 may be metal strips, plastic strips or strips of other materials. In some implementations, at least a part of the first connection members 41 corresponds to at least a part of the end portions of the support strips 13422. In some embodiments, at least a part of the first connection members 41 corresponds to at least a part of the end portions of the support strips 13421. In some embodiments, the plurality of support strips 13421 and the plurality of support strips 13422 are arranged crosswise, more specifically, the plurality of support strips 13421 and the plurality of support strips 13422 are connected, for example, in a perpendicularly cross manner.

In some embodiments, the fixed canopy 1341 may include a grid-type frame similar to that of the movable canopy 1342, and the grid-type frame may be covered by a fabric layer.

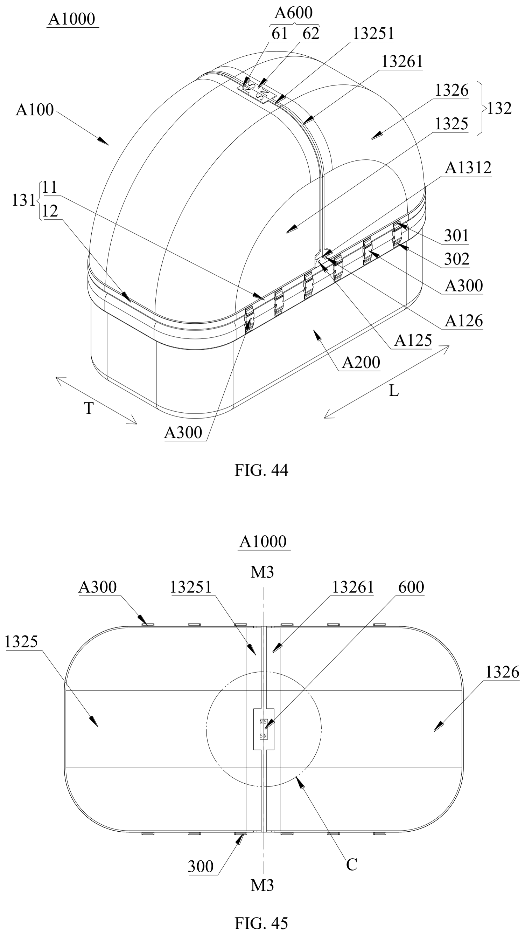

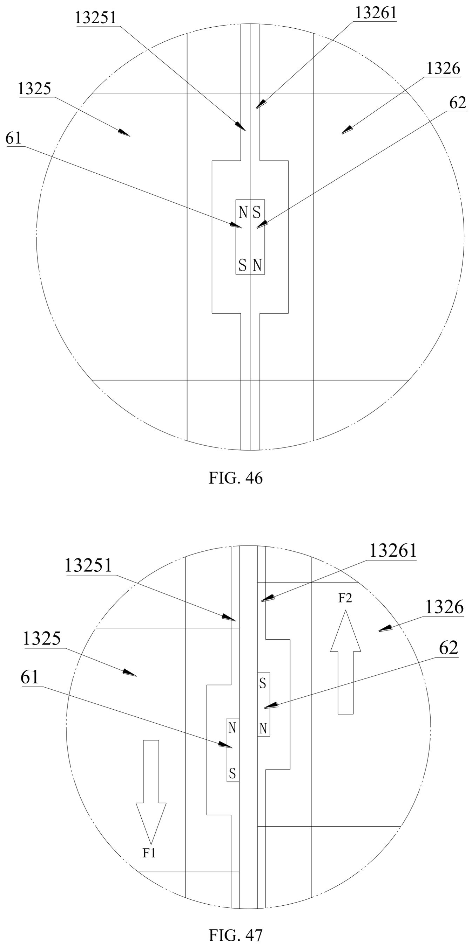

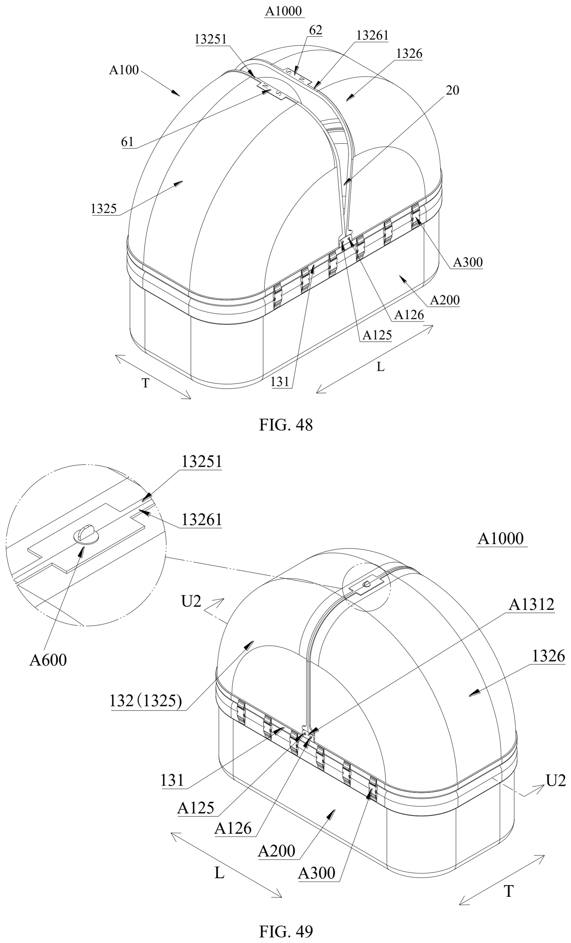

FIG. 44 schematically shows a stereoscopic view of a carrier A1000 provided in some embodiments of the present disclosure. The carrier A1000 may be, but is not limited to, a pet carrier. As shown in FIG. 44, the carrier A1000 includes a canopy assembly A100 and an accommodation body A200. FIG. 45 shows a top view of the carrier A1000. FIG. 46 shows an enlarged view of portion C in FIG. 45, where a first half canopy 1325 and a second half canopy 1326 are connected through a magnetic device A600 as a connection assembly. FIG. 47 shows the first half canopy 1325 and the second half canopy 1326 being separated. FIG. 48 shows a stereoscopic view of the canopy 132 in an incompletely opened state.

As shown in FIG. 44, in this embodiment, the canopy assembly A100 includes a frame 131 at the bottom and a canopy 132 supported by the frame 131. The frame 131 is, for example, generally rectangular, and includes two opposite first side edges 11 and two opposite second side edges 12. A pivot base A1312 is disposed at the middle position of each of the first side edges 11, each of the pivot bases A1312 is provided with a pivot shaft A125 and a pivot shaft A126, and the pivot shaft A125 and the pivot shaft A126 are spaced apart from each other in the longitudinal direction. In some embodiments, the frame 131 may be an integrally formed part.

The canopy 132 includes two half canopies arranged opposite to each other, namely, the first half canopy 1325 and the second half canopy 1326. Each of the half canopies may include a canopy cloth and an arched bracket (not shown in the figure) configured to support the canopy cloth into an arched shape. The bottom edge of each of the half canopies is connected to the frame 131 respectively. The first half canopy 1325 includes an arched edge 13251, and both ends of the edge 13251 are respectively pivotally connected to the corresponding pivot shafts A125. The second half canopy 1326 includes an arched edge 13261, and both ends of the edge 13261 are respectively pivotally connected to the corresponding pivot shafts A126. Referring to FIG. 44 and FIG. 45, when the canopy 132 is fully expanded, the edge 13251 of the first half canopy 1325 and the edge 13261 of the second half canopy 1326 abut against each other, and the position where the two abut against each other corresponds to a lateral center plane M3-M3 of the canopy assembly A100. Referring to FIG. 48, when the edge 13251 and the edge 13261 pivot downward around the corresponding pivot shafts respectively, the canopy 132 opens from the middle.

Referring to FIG. 44 and FIG. 48, the frame 131 may be placed on the top of the accommodation body A200, and the canopy assembly A100 and the accommodation body A200 are detachably connected through a plurality of connection assemblies A300. In the absence of conflict, the structures of the accommodation body A200 and the connection assembly A300 can refer to the descriptions above. In some embodiments, the plurality of connection assemblies A300 are arranged along each of the first side edges 11 of the frame 131. In some embodiments, a part of the plurality of connection assemblies A300 may also arranged along each of the second side edges 12 of the frame 131. Referring to FIG. 44, when the canopy assembly A100 is in a fully expanded state, the canopy 132 can completely cover the top opening 20 of the accommodation body A200. Referring to FIG. 48, when the canopy 132 is fully opened from the middle to both sides, the top opening 20 is exposed.

Referring to FIG. 45 and FIG. 46, a magnetic device A600 is provided between the edge 13251 of the first half canopy 1325 and the edge 13261 of the second half canopy 1326. Under the action of the magnetic device A600, the edge 13251 of the first half canopy 1325 and the edge 13261 of the second half canopy 1326 can be attracted together to keep the canopy assembly A100 in the fully expanded state. In some embodiments, the magnetic device A600 includes, for example, a first magnetic body 61 and a second magnetic body 62. The first magnetic body 61 is, for example, disposed at the lateral middle position of the edge 13251, and the second magnetic body 62 is, for example, disposed at the lateral middle position of the edge 13261, and the two magnetic poles (the N pole and the S pole in FIG. 46) of the first magnetic body 61 are arranged oppositely to the two magnetic poles of the second magnetic body 62. When the edge 13251 and the edge 13261 are in contact, the two magnetic poles of the first magnetic body 61 and the two magnetic poles of the second magnetic body 62 are facing each other and attracted to each other in the longitudinal direction L.

Referring to FIG. 47 and FIG. 48, when it is needed to open the canopy 132, a lateral thrust F1 may be applied to the first half canopy 1325, and/or a lateral thrust F2 may be applied to the second half canopy 1326, such that the like magnetic poles of the first magnetic body 61 and the second magnetic body 62 are facing each other, that is, the canopy 132 can be easily opened from the middle.

Of course, the implementation of the magnetic device A600 and the arrangement position of the magnetic device A600 are not limited to the above descriptions, and FIG. 49 to FIG. 56 show some variations of the magnetic device A600.

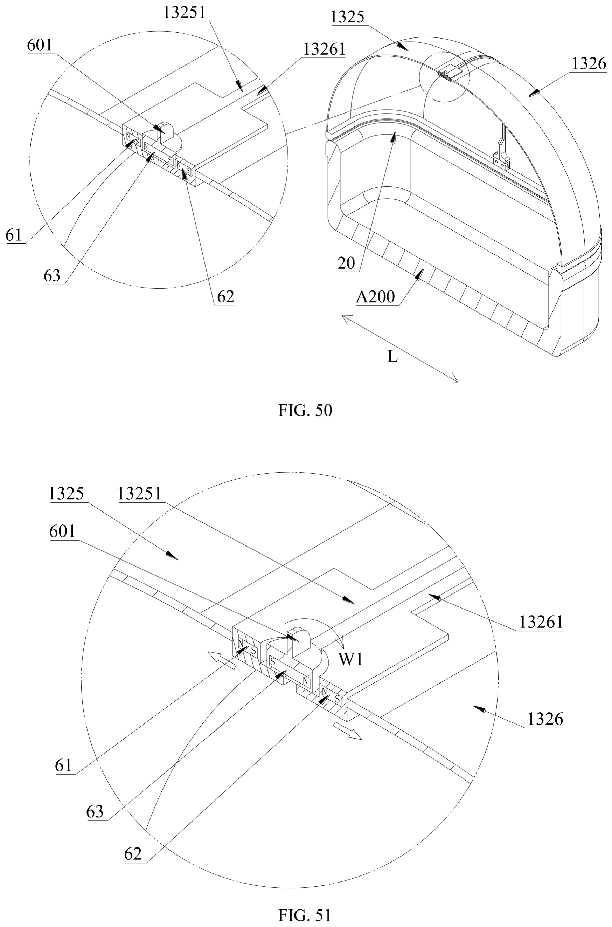

Referring to the variant embodiments shown in FIG. 49 and FIG. 51, the magnetic device A600 includes, for example, a first magnetic body 61, a second magnetic body 62, and a knob 601 provided with a third magnetic body 63. The first magnetic body 61 is, for example, arranged at the lateral middle position of the edge 13251, and the second magnetic body 62 is, for example, arranged at the lateral middle position of the edge 13261, and the first magnetic body 61 and the second magnetic body 62 are arranged in opposite magnetic directions. The knob 601 provided with the third magnetic body 63 is rotatably mounted on the edge 13251 or the edge 13261. Referring to FIG. 50, when the two magnetic poles of the third magnetic body 63 are respectively facing the opposite magnetic pole of the first magnetic body 61 and the opposite magnetic pole of the second magnetic body 62, the first magnetic body 61, the third magnetic body 63 and the second magnetic body 62 are successively attracted together. Referring to FIG. 51, when it is needed to open the canopy 132, for example, the knob 601 is rotated in a direction indicated by the arrow W1, such that the two magnetic poles of the third magnetic body 63 are respectively facing the like magnetic pole of the first magnetic body 61 and the like magnetic pole of the second magnetic body 62 and repel each other, that is, the canopy 132 can be easily opened from the middle.

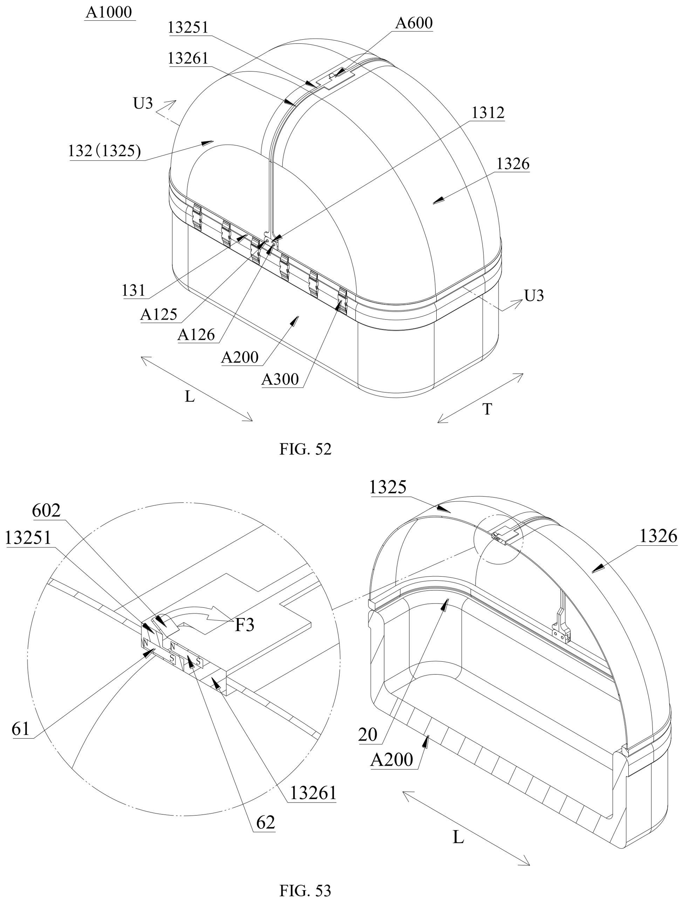

Referring to the variant embodiments shown in FIG. 52 and FIG. 53, the magnetic device A600 includes, for example, a first magnetic body 61 and a second magnetic body 62. The first magnetic body 61 is, for example, disposed at the lateral middle position of the edge 13251, and the second magnetic body 62 is, for example, disposed at the lateral middle position of the edge 13261. Referring to FIG. 53, when the edge 13251 of the first half canopy 1325 and the edge 13261 of the second half canopy 1326 are in contact, the first magnetic body 61 and the second magnetic body 62 are attracted to each other in an up-and-down direction (i.e., overlap and attach with each other in the up-and-down direction). When it is needed to open the canopy 132, the first magnetic body 61 and the second magnetic body 62 can be separated by pulling up the upper one located above of the edge 13251 of the first half canopy 1325 and the edge 13261 of the second half canopy 1326 (in this embodiment, the edge 13261 of the second half canopy 1326 is the upper one). In some embodiments, the edge 13251 or the edge 13261 may be provided with a lifting portion 602, and by using the lifting portion 602, a force F3 for separating the first magnetic body 61 and the second magnetic body can be conveniently applied.

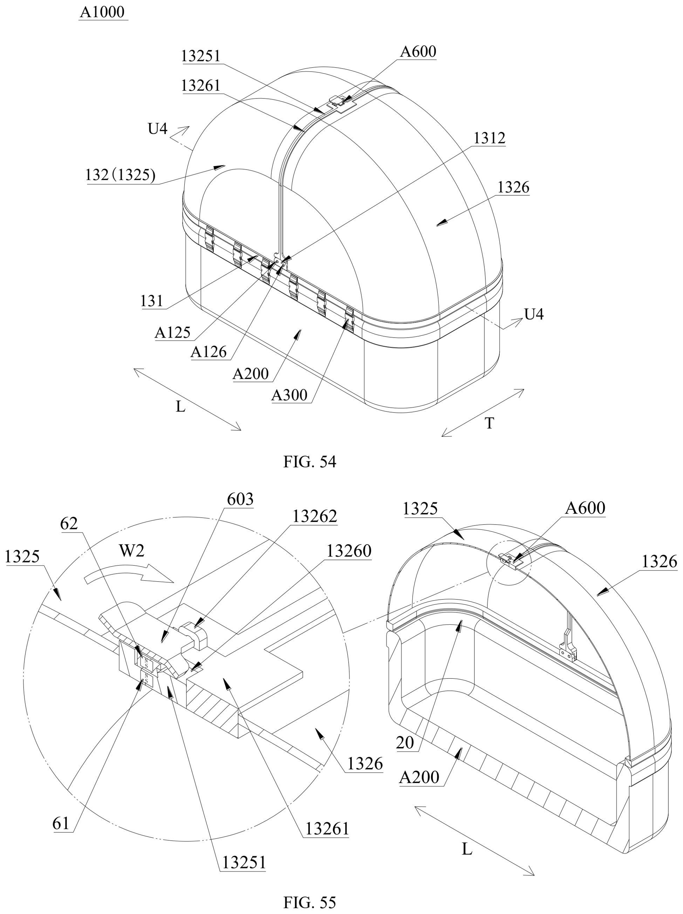

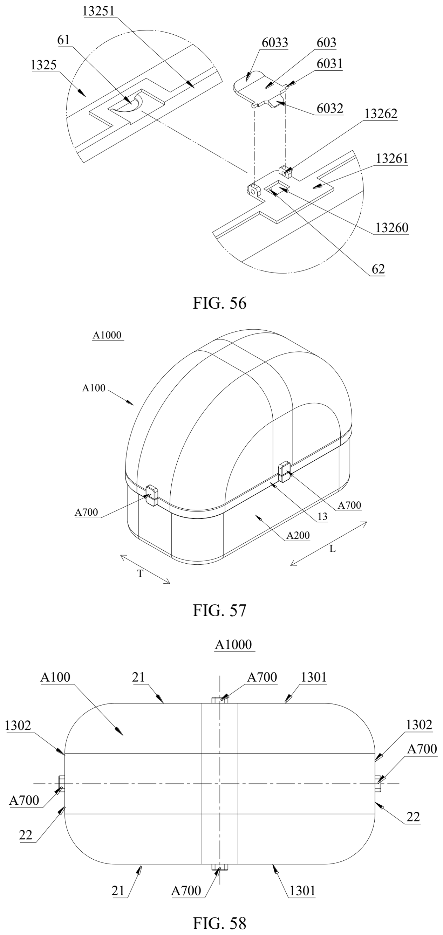

Referring to the variant embodiments shown in FIG. 54 and FIG. 56, the magnetic device A600 includes, for example, a first magnetic body 61, a second magnetic body 62, and an operating member 603. The first magnetic body 61 is, for example, arranged at the lateral middle position of the edge 13251, and the second magnetic body 62 is, for example, arranged at the lateral middle position of the edge 13261. Referring to FIG. 55, when the edge 13251 of the first half canopy 1325 and the edge 13261 of the second half canopy 1326 are in contact, the first magnetic body 61 and the second magnetic body 62 are attracted to each other in an up-and-down direction. In addition, the edge 13261 being the upper one is provided with a pivot base 13262 and a hole 13260, the operating member 603 is pivotally connected to the pivot base 13262 through the shaft 6031, and the operating member 603 includes an abutting end 6032 and an operating end 6033. When the operating end 6033 is driven by an external force to pivot in a direction of arrow W2, the abutting end 6032 may pass through the hole 13260 and apply a downward thrust to the edge 13251 located below, so as to separate the first magnetic body 61 and the second magnetic body 62.

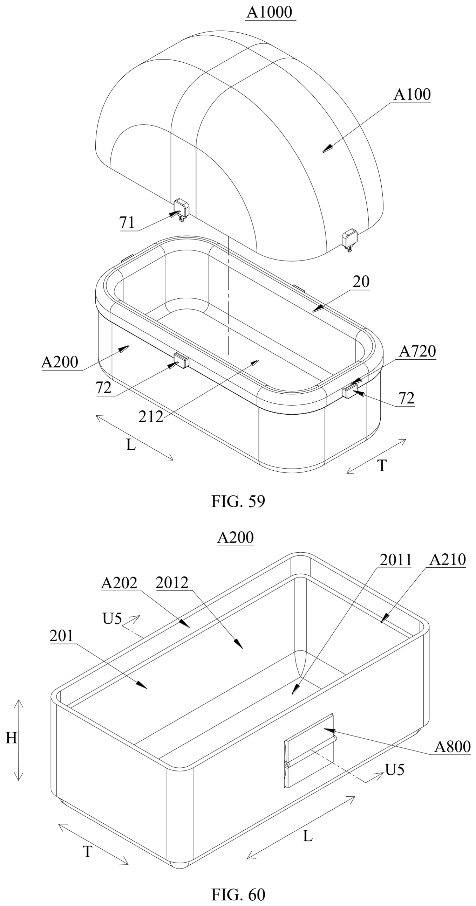

FIG. 57 shows a stereoscopic view of a carrier A1000 provided according to some embodiments of the present disclosure. The carrier A1000 may be, but is not limited to, a pet carrier. As shown in FIG. 57, the carrier A1000 includes a canopy assembly A100 and an accommodation body A200, the canopy assembly A100 is connected to the accommodation body A200, and the canopy assembly A100 is in a fully expanded state. FIG. 58 shows a top view of the carrier A1000. FIG. 59 shows a stereoscopic view of the canopy assembly A100 and the accommodation body A200 of the carrier A1000 being completely separated.

Referring to FIG. 57 and FIG. 58, the frame 13 at the bottom of the canopy assembly A100 is, for example, generally rectangular, and four sides of the frame 13 correspond to four side edges of the canopy assembly A100. The four side edges are two opposite first side edges 1301 and two opposite second side edges 1302, respectively. The two second side edges 1302 are located between the two first side edges 1301. The two first side edges 1301 extend longitudinally, and the two second side edges 1302 extend transversely. In some embodiments, a length of the first side edge 1301 extending in the longitudinal direction is greater than a length of the second side edge 1302 extending in the transverse direction. The first side edge 1301 may be called a long side or a long side edge, and the second side edge 1302 may be called a short side or a short side edge.

Referring to FIG. 58 and FIG. 59, in the absence of conflict, the structure of the accommodation body A200 may refer to the structure of the accommodation body A200 shown in FIG. 1 to FIG. 4. The shape of the accommodation body A200 is similar to a cuboid, which includes two opposite first side surfaces 21 and two opposite second side surfaces 22, and the two second side surfaces 22 are located between the two first side surfaces 21. In this embodiment, the first side surfaces 21 extend longitudinally, and the second side surfaces 22 extend transversely. In some embodiments, the length of the first side surface 21 extending in the longitudinal direction is greater than the length of the second side surface 22 extending in the transverse direction.

Referring to FIG. 57 to FIG. 58, when the canopy assembly A100 is in the use state, the bottom of the canopy assembly A100 can be covered on the top of the accommodation body A200, the first side edges 1301 of the canopy assembly A100 correspond to the first side surfaces 21 of the accommodation body A200, and the second side edges 1302 of the canopy assembly A100 correspond to the second side surfaces 22 of the accommodation body A200. The canopy assembly A100 and the accommodation body A200 are detachably connected through a plurality of connection assemblies A300. More specifically, at least one connection assembly A700 is connected between each of the first side edges 1301 of the canopy assembly A100 and each of the first side surfaces 21 of the accommodation body A200, and at least one connection assembly A700 is connected between each of the second side edges 1302 of the canopy assembly A100 and each of the second side surfaces 22 of the accommodation body A200. Although one connection assembly A700 is provided between each pair of the first side edge 1301 and the first side surface 21, and one connection assembly A700 is provided between each pair of the second side edge 1302 and the second side surface 22 in this embodiment, in other embodiments, the number of the connection assemblies A700 may be set as needed. In the absence of conflict, the arrangement position of the connection assemblies A700 can refer to the arrangement position of the connection assemblies A300 mentioned above.

In this embodiment, an exemplary implementation of the connection assembly A700 is shown. The connection assembly A700 includes an extension fixing member (also referred to as a first connection member) 71 and a storage engaging member (also referred to as a second connection member) 72. One of the extension fixing member 71 and the storage engaging member 72 is connected to the canopy assembly A100, and the other thereof is connected to the accommodation body A200. The storage engaging member 72 has a storage cavity A720, and the storage cavity A720 is configured for the extension fixing member 71 to plug into and get engaged therewith. The connection assembly A700 forms a plug-in fixing point between the canopy assembly A100 and the accommodation body A200.

In some embodiments, the canopy assembly A100 may include a grid-type frame, and the canopy assembly A100 covers the top opening 20 of the accommodation body A200 through the grid-type frame.

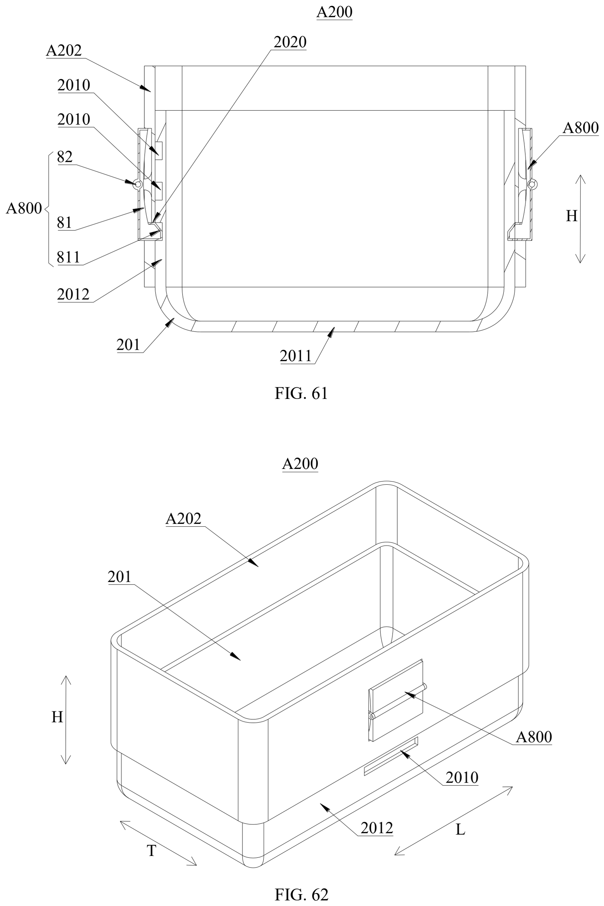

An accommodation body A200 is provided in some embodiments of the present disclosure, and FIG. 60 shows a stereoscopic view of the accommodation body A200 providing a smaller volume. FIF. 61 shows a sectional view taken along line U5-U5 of FIG. 60. FIG. 62 shows another stereoscopic view of the accommodation body A200 providing a larger volume.

The accommodation body A200 may include a box body 201, and the box body 201 includes a bottom wall 2011 and a side wall 2012 defining a top opening A210. At least one telescopic wall A202 is sleeved on the side wall 2012 of the box body 201, and the telescopic wall A202 is capable of extending and retracting in a height direction H of the box body 201, such that it is able to extend or retract relative to the side wall 2012. It can be understood that the longer the telescopic wall A202 extends upward in the height direction H, the larger the volume of the accommodation body A200 can be. The accommodation body A200 further includes a locking mechanism A800, and the locking mechanism A800 is configured to lock the position of the telescopic wall A202, so as to prevent the telescopic wall A202 from unexpectedly extending and retracting.

Specifically in this embodiment, one telescopic wall A202 is sleeved on the side wall 2012 of the box body 201. The locking mechanism A800 includes, for example, a locking member 81, a pivot shaft 82, and a reset member (not shown in the figure). The middle portion of the locking member 81 is pivotally connected to the telescopic wall A202 through the pivot shaft 82, and a protruding structure 811 is provided at one end of the locking member 81. The telescopic wall A202 is provided with a through hole 2020. The side wall 2012 is provided with a plurality of concave portions 2010, and the plurality of concave portions 2010 are spaced apart from each other along the height direction H. When the telescopic wall A202 is adjusted into a proper place, the through hole 2020 faces the corresponding concave portion 2010, and the protruding structure 811 passes through the through hole 2020 and is engaged with the concave portion 2010, thereby locking the position of the telescopic wall A202. The reset member acts on the locking member 81 to keep the locking member 81 in a locked position where its protruding structure 811 is engaged with the concave portion 2010. The reset member is, for example, a torsion spring, and the torsion spring may be sleeved on the pivot shaft 82, and the two spring arms of the torsion spring may abut against the locking member 81 and the telescopic wall A202 respectively.

When the volume of the accommodation body A200 needs to be adjusted, a pressing force is applied to the other end of the locking member 81, and upon receiving the force, the locking member 81 is rotated around the pivot shaft 82. After the protruding structure 811 is withdrawn from the concave portion 2010, the position of the telescopic wall A202 can be adjusted in an up-and-down direction. When the telescopic wall A202 is adjusted into a proper place, the locking member 81 may once more lock the position of the telescopic wall A202.

In the absence of conflict, the accommodation body A200 can be provided with the canopy assembly A100 described in any of the aforementioned embodiments, and the canopy assembly A100 is configured to be engaged with the telescopic wall A202.

The technical features of the above embodiments can be combined arbitrarily. For example, in the absence of conflict, the technical features related to the carrier 100 shown in FIG. 1A to FIG. 17E and the technical features related to the carrier A1000 shown in FIG. 18 to FIG. 62 can be combined arbitrarily. For example, in the absence of conflict, the specific implementations of the carrier for the detachably connection to the base in FIG. 13 to FIG. 17E can be applied to any of the carriers shown in FIG. 1A to FIG. 12, FIG. 18 to FIG. 21, and FIG. 30 to FIG. 62, such that these carriers may also be detachably connected to the base. The guide member shown in FIG. 12 can be applied to any of the carriers shown in FIG. 1A to FIG. 10, FIG. 13A to FIG. 21, FIG. 30 to FIG. 32, and FIG. 40 to FIG. 59. The structure of the accommodation body in FIG. 60 to FIG. 62 can be applied to the carrier in any of the embodiments of the present disclosure. The connection enhancement member of the carrier in FIG. 1A to FIG. 10 may be interchanged with the first connection member and the second connection member of the carrier shown in FIG. 18 to FIG. 32 and FIG. 40 to FIG. 59. The canopy portion of the carrier shown in FIG. 1A to FIG. 10 can be interchanged with the canopy portion of the carrier shown in FIG. 18 to FIG. 32 and FIG. 40 to FIG. 59. To make the description concise, not all possible combinations of the various technical features in the aforementioned embodiments are described. However, as long as there is no contradiction in the combination of these technical features, they should be considered to be within the scope of this specification.

The aforementioned embodiments only represent several examples of the present disclosure, and the descriptions thereof are relatively specific and detailed, but it should not be construed as restricting the scope of the present disclosure. It should be noted that, for those skilled in the art, several variations and improvements may be made without departing from the concept of the present disclosure, and these are all belong to the protection scope of the present disclosure. Therefore, the protection scope of the present disclosure shall be defined by the appended claims.

## Claims

1. A carrier, comprising:
a box body portion;
a canopy portion, detachably connected to the box body portion through a plurality of connection enhancement members, so as to fasten the canopy portion to the box body portion;
wherein a first end portion of each of the connection enhancement members is connected to the canopy portion, or each of the connection enhancement members and the canopy portion form an integral structure, each of the connection enhancement members has a second end portion extending from the canopy portion, and the second end portion of each of the connection enhancement members is detachably connected to the box body portion; or, each of the connection enhancement members comprises a first connection member and a second connection member, the first connection member is connected to the canopy portion, the second connection member is connected to the box body portion,
and the first connection member is detachably connected to the second connection member.

2. The carrier according to claim 1, further comprising a bracket assembly connected to the box body portion;
wherein the bracket assembly is provided with retaining rings, the retaining rings each forms an opening, and the second end portion of each of the connection enhancement members extends through one of the openings and then reverses toward the canopy portion and is positioned; or
the bracket assembly comprises concave portions, the second end portion of each of the connection enhancement members has a rigid hook-shaped end portion, and the hook-shaped end portion is adapted to be received by one of the concave portions; or
the second end portion of each of the connection enhancement members is provided with a first guide rod; the bracket assembly is formed with first guide grooves, and each of the first guide grooves is configured to receive, guide and limit one of the first guide rods;
or, each of the connection enhancement members comprises a first connection band having the first end portion and the second end portion; the carrier further comprises second connection bands attached to the bracket assembly, and each of the second connection bands has an exposed free end; the free end of each of the second connection bands is detachably connected to the second end portion of one of the first connection bands.

3. The carrier according to claim 2, wherein
each of the second connection bands is attached to a surface of the bracket assembly facing an outer bottom portion of the box body portion, and the free end of each of the second connection bands passes through between the bracket assembly and the box body portion and is exposed; or
the bracket assembly has hollow channels, and each of the second connection bands extends in one of the hollow channels and is exposed from an end of the one of the hollow channels; or
the bracket assembly is formed with second guide grooves, each of the second connection bands comprises a second guide rod embedded in the each of the second connection bands, and each of the second guide rods is adapted to be accommodated in one of the second guide grooves.

4. The carrier according to claim 3, wherein
the bracket assembly comprises a first frame, a second frame, and a connection frame, the first frame is close to an upper periphery of the box body portion, the second frame is located below the first frame, the connection frame is connected between the first frame and the second frame, and a contour of the first frame and a contour of the connection frame correspond to a contour of the box body portion;
each of the second connection bands is attached to a surface of the connection frame facing the outer bottom portion of the box body portion through a fastener, and the free end of each of the second connection bands is exposed at an end of the connection frame; or
the connection frame is formed with the hollow channels, and the free end of each of the second connection bands is exposed from an end of the connection frame; or
the connection frame is formed with the second guide grooves.

5. The carrier according to claim 1, wherein
the carrier comprises an accommodation body, and the accommodation body comprises the box body portion; the accommodation body has a top opening, and the canopy portion is covered on the accommodation body to cover the top opening;
a frame at a bottom of the canopy portion comprises two opposite first side edges and two opposite second side edges, and the two second side edges are located between the two first side edges;
the accommodation body comprises two opposite first side surfaces and two opposite second side surfaces, and the two second side surfaces are located between the two first side surfaces;
at least one of the connection enhancement members is arranged between each of the first side edges and the opposite first side surface, and at least one of the connection enhancement members is arranged between each of the second side edges and the opposite second side surface.

6. The carrier according to claim 1, wherein the carrier comprises an accommodation body, and the accommodation body comprises the box body portion; the accommodation body has a top opening, and the canopy portion is covered on the accommodation body to cover the top opening;
wherein the canopy portion comprises two half canopies oppositely arranged, the two half canopies are a first half canopy and a second half canopy respectively, and an edge of the first half canopy and an edge of the second half canopy opposite to each other are detachably connected through at least one connection assembly; or
the canopy portion comprises a fixed canopy and a movable canopy, the fixed canopy is non-detachably connected to the accommodation body; a bottom of the movable canopy is detachably connected to the accommodation body through at least one of the connection enhancement members, and/or, an edge of the movable canopy and an edge of the fixed canopy opposite to each other are detachably connected through at least one connection assembly.

7. The carrier according to claim 6, wherein the edge of the first half canopy and the edge of the second half canopy opposite to each other are attracted to each other through a magnetic device as the connection assembly; the magnetic device comprises a first magnetic body arranged at the edge of the first half canopy and a second magnetic body arranged at the edge of the second half canopy;
when the edge of the first half canopy and the edge of the second half canopy opposite to each other are in contact, the first magnetic body and the second magnetic body are facing each other and attracted to each other; or
one of the edge of the first half canopy and the edge of the second half canopy opposite to each other is equipped with a knob, and the knob is provided with a third magnetic body; when the edge of the first half canopy and the edge of the second half canopy opposite to each other are in contact, by rotating the knob, the third magnetic body is caused to be attracted to or repelled from the first magnetic body and the second magnetic body.

8. The carrier according to claim 7, wherein when the edge of the first half canopy and the edge of the second half canopy opposite to each other are in contact, the first magnetic body and the second magnetic body overlap and attach with each other in an up-and-down direction;
wherein, a lifting portion is provided on the first half canopy or the second half canopy where the upper one of the first magnetic body and the second magnetic body is located; or
a pivot base and a hole are provided on the first half canopy or the second half canopy where the upper one of the first magnetic body and the second magnetic body is located, the pivot base is pivotally connected to an operating member, and the operating member comprises an abutting end and an operating end; when the operating end is driven by an external force, the abutting end passes through the hole and applies a downward thrust to the second half canopy or the first half canopy located below, so as to separate the first magnetic body and the second magnetic body.

9. A carrier, comprising:
a box body comprising a bottom wall and a side wall, at least one telescopic wall being sleeved on the side wall of the box body, and the at least one telescopic wall being capable of extending and retracting in a height direction of the box body; and
a locking mechanism configured to lock a position of the at least one telescopic wall.

10. A carrier, wherein a bottom of the carrier is provided with an engaging member or a connection rod, and the engaging member or the connection rod is adapted to be rotatable between a use position and a storage position.

11. The carrier according to claim 10, comprising a bottom support structure and a storage portion located above the bottom support structure; a recess portion is formed on a bottom surface of the bottom support structure, and the recess portion is provided with at least one rod therein, the at least one rod is mounted with at least one engaging member, the engaging member is provided with an outwardly protruding engaging portion; the engaging member is capable of rotating around the rod on which it is located, such that the engaging portion is rotated to the use position or the storage position.

12. The carrier according to claim 10, comprising a box body portion, an outer bottom portion of the carrier comprising a recess portion; when in the storage position, the connection rod is received in the recess portion; when in the use position, the connection rod is pivoted out from the recess portion.

13. A travel device, comprising a base and a carrier, the carrier being detachably connected to the base.

14. The travel device according to claim 13, wherein
the carrier comprises a connection rod, the connection rod is received in a recess portion of an outer bottom portion of the carrier and is capable of being rotated out from the recess portion;
the base comprises a connection recess and a first activation part, the connection recess is provided with a connection component therein, the connection component has an opening portion for the connection rod to pass through, and the connection recess has an inclined surface for guiding the connection rod;
the carrier is provided with a second activation part at a position corresponding to the first activation part; when the carrier is placed on the base, the first activation part triggers the second activation part, and after the second activation part is triggered, the connection rod is caused to pivot to be engaged with the connection component.

15. The travel device according to claim 13, wherein the base comprises a connection recess, the connection recess is provided with a connection component therein, the connection component has an opening portion; the carrier further comprises a bracket assembly connected to the box body portion, the bracket assembly comprises a second frame capable of slidably cooperating with the connection recess, and the second frame is capable of passing through the opening portion of the connection component and being loaded into the connection component; the second frame is provided with a structure cooperating with the connection component.

16. The travel device according to claim 15, wherein
the second frame is provided with a connection column capable of extending and retracting; when the second frame is loaded into the connection component, the connection column is adapted to extend out from the second frame to be engaged with the connection component;
or, the second frame is provided with a stop ring, and when the second frame is loaded into the connection component and the second frame slides into place relative to the connection component, the stop ring is engaged and cooperates with the connection component.

17. The travel device according to claim 13, wherein the base slidably cooperates with the carrier, and the base is provided with an activation part and a connection component capable of extending and retracting relative to the base; when the carrier slides into place on the base, the activation part is triggered to cause the connection component to extend and be engaged with the carrier.

18. The travel device according to claim 17, wherein
the base comprises a guide groove, the guide groove is provided with the connection component and the activation part therein, and the connection component is capable of extending and retracting relative to the guide groove; the carrier further comprises a bracket assembly connected to the box body portion, the bracket assembly comprises a second frame configured to be engaged with the connection component, and the bracket assembly is mounted with a guide member slidably cooperating with the guide groove; when the guide member slides into place, the guide member triggers the activation part, causing the connection component to extend relative to the guide groove and be engaged with the second frame;
or, the base defines an internal space, and the carrier slidably cooperates with the internal space; the internal space is provided with the connection component and the activation part therein, and the connection component is capable of extending and retracting relative to a wall of the internal space; the carrier comprises a connection recess configured to be engaged with the connection component; when the carrier slides into place, the box body portion triggers the activation part, causing the connection component to extend to be engaged with the connection recess.
